(19) Europäisches Patentamt
European Patent Office
Office européen des brevets

(11) **EP 4 301 038 A1**

(12) **EUROPEAN PATENT APPLICATION**

(43) Date of publication:
**03.01.2024 Bulletin 2024/01**

(21) Application number: **23180276.0**

(22) Date of filing: **20.06.2023**

(51) International Patent Classification (IPC):
*H04W 28/26* (2009.01)   *H04W 72/04* (2023.01)
*H04W 72/40* (2023.01)   *H04W 74/08* (2009.01)
*H04W 72/25* (2023.01)

(52) Cooperative Patent Classification (CPC):
**H04W 28/26;** H04W 72/0446; H04W 72/25;
H04W 72/40; H04W 74/0808

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.06.2022   US 202263354057 P
31.05.2023   US 202318204234**

(71) Applicant: **Samsung Electronics Co., Ltd.
Suwon-si, Gyeonggi-do 16677 (KR)**

(72) Inventors:
• **FOUAD, Yaser Mohamed Mostafa Kamal
San Jose, CA 95134 (US)**
• **SARTORI, Philippe
San Jose, CA 95134 (US)**
• **HU, Liang
San Jose, CA 95134 (US)**

(74) Representative: **Kuhnen & Wacker
Patent- und Rechtsanwaltsbüro PartG mbB
Prinz-Ludwig-Straße 40A
85354 Freising (DE)**

(54) **SYSTEMS AND METHODS FOR NEW RADIO SIDELINK PROCEDURES IN UNLICENSED SPECTRUMS**

(57)    A system and a method are disclosed for multi-slot resource reservations in new radio (NR) sidelink (SL) using the unlicensed spectrum. Embodiments include determining, by an NR user equipment (UE), a multi-slot reservation configuration, wherein the multi-slot reservation configuration comprises a plurality of reservation slots corresponding to a time domain and frequency domain; performing, by the NR UE, a listen-before-talk (LBT) operation; and in response to LBT operation, indicating, by the NR UE, a selection of a plurality of multi-slot resources in the time domain and the frequency domain on which to transmit one or more signals, the plurality of multi-slot resources corresponding to the plurality of reservation slots of the multi-slot reservation configuration. Embodiments further include updates to Mode 2 signaling including the plurality of multi-slot resources is further based on an evaluation of a high-layer parameter, and/or selecting a single-candidate resource slot, based on consecutive subsequent slots.

FIG. 5

Processed by Luminess, 75001 PARIS (FR)

**Description**

TECHNICAL FIELD

The disclosure generally relates to new radio (NR) sidelink (SL) communications. More particularly, the subject matter disclosed herein relates to improved NR SL communications systems and protocols for use in unlicensed spectrums of wireless bands.

BACKGROUND

In NR and LTE systems, a UE first attempts to perform synchronization before transmitting (Tx) or receiving (Rx) any data. The main purpose of this synchronization is to acquire the LTE subframe and the NR slot boundaries. In addition, a UE is able to acquire the TDD configuration as well as the DFN and subframe number in case of LTE and the DFN and the slot index in case of NR. For a system to operate efficiently, it is essential that all the UEs are synchronized to the same source. To achieve this, in both LTE and NR, the possible synchronization sources are ordered based on priority. Subsequently, when a UE attempts to synchronize, it follows the 3GPP specification to find its synchronization source. In particular, the synchronization sources in case of LTE are prioritized as follows:

| Order | Synchronization source |
| --- | --- |
| Level 1 | Either GNSS or eNB according to pre-configuration. |
| Level 2 | A SyncRef UE directly synchronized to a Level 1 source. |
| Level 3 | A SyncRef UE synchronized to a Level 2 source, i.e. indirectly synchronized to a Level 1 source. |
| Level 4 | Any other SyncRef UE. |
| Level 5 | UE's internal clock. |

*Order of synchronization sources for LTE UEs.*

On the other hand, the synchronization sources in case of NR are prioritized as follows:

| Order | Synchronization source |
| --- | --- |
| Level 1 | Either GNSS or eNB/gNB, according to (pre-)configuration. |
| Level 2 | A SyncRef UE directly synchronized to a Level 1 source. |
| Level 3 | A SyncRef UE synchronized to a Level 2 source, i.e. indirectly synchronized to a Level 1 source. |
| Level 4 | Whichever of GNSS or eNB/gNB was not (pre-)configured as the Level 1 source. |
| Level 5 | A SyncRef UE directly synchronized to a Level 4 source. |
| Level 6 | A SyncRef UE synchronized to a Level 5 source, i.e. indirectly synchronized to a Level 4 source. |
| Level 7 | Any other SyncRef UE. |
| Level 8 | UE's internal clock. |

*Order of synchronization sources for NR UEs.*

NR SL is designed to allow high data rate communication over short links. This helps preserve the user equipment (UE) transmit (Tx) power and at the same time allow the UE to reuse the available spectrum through spatial reuse. However, the limited spectrum available for sidelink transmissions represents a limit on the maximum throughput that the system may achieve. To improve this throughput, unlicensed transmission bands enable NR UEs to have access to a larger spectrum for transmission.

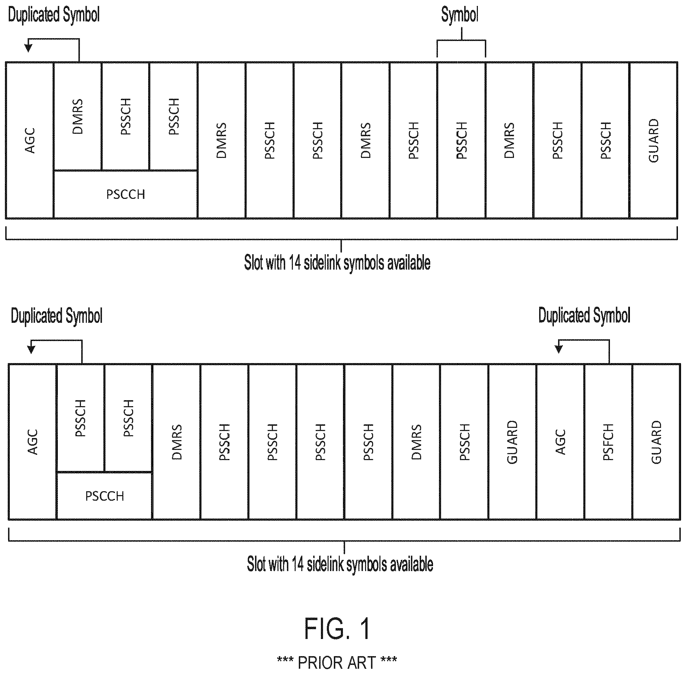

FIG. 1 depicts a typical slot with 14 sidelink symbols available, including examples with, and without, data relating to a physical sidelink feedback channel (PSFCH). FIG. 1 is provided solely for illustrative purposes of a single-slot sidelink format according to conventional art.

Despite having more spectrum options through the unlicensed spectrum, NR UEs are required to coexist and contend for resources with other NR UEs as well as other systems that are operating in the unlicensed spectrum (e.g., WiFi). In addition, most UEs are required to abide by the rules of unlicensed channel access mechanisms. In particular, an NR UE that performs a reservation to transmit at a particular slot is required to perform a Listen Before Talk (LBT) procedure before accessing the channel. However, it is possible that the UE will not be able to acquire the channel on time. Additionally, in this case, the UE attempts to acquire the channel much earlier than its intended slot for transmission and it will be required to transmit a reservation signal, which may result in power wastage and reduce the overall resource utilization in the unlicensed spectrum.

A further issue with NR SL in the unlicensed band is that two types of sensing must be done by all NR UEs: 1) the Mode 2 sensing of NR sidelink and 2) the LBT sensing of unlicensed to meet regulatory requirements. The additional Mode 2 sensing puts conventional NR UEs at a disadvantage when compared to other systems operating in the unlicensed spectrum by requiring additional steps to be performed that are not required by non-NR UEs.

SUMMARY OF THE INVENTION

Accordingly, there is a need in the art for methods, systems, configurations and techniques to improve NR SL utilization and operation. Disclosed here are techniques to enhance the ability of NR UEs to successfully perform Mode 2 sensing operations and perform successful LBT procedures before their intended future resource for transmission. In particular, a new multi-slot reservation approach is described to allow UEs to perform multiple transmissions with a single LBT and utilize a new Mode 2 configuration.

Further new techniques described herein include a mini-slot approach to allow NR UEs to start their transmissions at opportunities other than the slot boundaries to allow NR UEs to succeed in a LBT procedure before the slot boundary. Further new techniques include a technique for associated signaling to enable COT sharing between Tx and Rx UEs when sending a TB and receiving the ACK/NACK feedback to allow reliance on COT sharing and accordingly skip the LBT sensing to improve its chances in acquiring the channel. Further new techniques described include an update to the Mode 2 resource selection procedure to consider the impact of power imbalance between adjacent sub-channels when performing resource selections.

Further new techniques described include a threshold based approach that limits the access to unlicensed spectrum based on priority to increase the chances of NR UEs in acquiring the unlicensed channel. Further new techniques described include techniques to enhance the resource utilization when operating in unlicensed spectrum by allowing UEs to transmit in slots that were previously excluded for LBT sensing, and/or allowing NR UEs to cancel any redundant resource reservations once their LBT is successful so that these resources may be used by their neighboring UEs.

Embodiments of the invention are defined in the appended claims.

In an embodiment, a method comprises determining, by a new radio (NR) user equipment (UE), a multi-slot reservation configuration, wherein the multi-slot reservation configuration comprises a plurality of reservation slots corresponding to a time domain and frequency domain; performing, by the NR UE, a listen-before-talk (LBT) operation; and in response to LBT operation, indicating, by the NR UE, a selection of a plurality of multi-slot resources in the time domain and the frequency domain on which to transmit one or more signals, the plurality of multi-slot resources corresponding to the plurality of reservation slots of the multi-slot reservation configuration.

In various embodiments, selecting the plurality of multi-slot resources is further based on an evaluation of a high-layer parameter, the high-layer parameter corresponding to a number of consecutive reservation slots in the plurality of reservation slots. In various embodiments, selecting the plurality of multi-slot resources comprises selecting a single-candidate resource slot, wherein selecting the single-candidate resource slot is based at least in part on determining that a number of consecutive slots subsequent to the single-candidate resource slot, corresponding to the plurality of reservation slots, are not reserved. In various further embodiments the selection of the single-candidate resource slot is performed randomly.

In various embodiments each slot of the multi-slot reservation configuration comprises separate physical sidelink control channel (PSCCH) data. In various embodiments only a first slot of the multi-slot reservation configuration comprises PSCCH data, the PSCCH data being transmitted at a lowest sub-channel index of a channel on which the multi-slot reservation signal is transmitted.

In various further embodiments, the PSCCH data further comprises a channel occupancy time (COT) sharing indication; and the multi-slot reservation configuration further comprises one or more slots subsequent to the plurality of reservation slots comprising transmission data from a separate NR UE. In various further embodiments, the multi-slot reservation configuration comprises sidelink control information (SCI), the SCI comprising one or more time resource indicator values (TRIV) and/or frequency resource indicator values (FRIV).

In various embodiments each slot of the plurality of selected multi-slot resources carries a different data transport block (TB). In various embodiments, each slot of the plurality of selected multi-slot resources is a blind repetition of a single TB. In various embodiments, a number of slots within the multi-slot reservation configuration is configured or pre-configured according to a resource pool configuration.

BRIEF DESCRIPTION OF THE DRAWING

In the following section, the aspects of the subject matter disclosed herein will be described with reference to exemplary embodiments illustrated in the figures, in which:

FIG. 1 depicts a typical slot with 14 sidelink symbols available, including examples with, and without, data relating to a physical sidelink feedback channel (PSFCH).
FIG. 2 is a diagram illustrating an example multi-slot reservation data transmission from a UE, including LBT sensing, according to various embodiments.
FIG. 3 is a diagram illustrating an example multi-slot reservation data transmission from a UE, utilizing a PSCCH slot including a PSCCH-only first slot technique, according to various embodiments.
FIG. 4 is a diagram illustrating an example multi-slot reservation data transmission from a UE, wherein a PSCCH indicates a COT sharing operating as part of an initial data block according to various embodiments.
FIG. 5 is an example flow diagram for multi-slot reservation methods according to various embodiments
FIG. 6A is a diagram illustrating an example structure for mini-slots transmission configurations, including lesser numbers of sub-channels according to various embodiments.
FIG. 6B is a diagram illustrating an example structure for mini-slots transmission configurations, including fewer candidate sub-channels for sending a PSCCH, according to various embodiments.
FIG. 6C is a diagram illustrating an example structure for mini-slots transmission configurations, wherein PSCCH is carried in a modified sidelink format.
FIG. 7 is an example flowchart for implementing mini-slot configurations according to various embodiments.
FIG. 8A is an example diagram depicting an example blind transmission structure for ACK/NACK feedback according to various embodiments.
FIG. 8B is an example diagram depicting an example contiguous blind retransmission structure for ACK/NACK feedback according to various embodiments.
FIG. 9 is an example diagram depicting NR sidelink slots with gap symbols before PSFCH slots according to various embodiments.
FIG. 10 is an example flowchart for UE operations for receiving packets in COT sharing situations involving PSFCH according to various embodiments.
FIG. 11 is an example diagram depicting interlacing of sidelink sub-channels in unlicensed bands to meet OCB requirements, wherein contiguous RBs are used to reduce overhead and gaps are used to reduce in-band emissions, according to various embodiments.
FIG. 12 is a block diagram of an electronic device according to an embodiment. The electronic device of FIG. 12 may comprise the receiving UE or transmitting UE performing the functions and embodiments described herein, such as those illustrated in FIGS. 1-11.
FIG. 13 shows a system including a UE and a gNB, in communication with each other.

DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.
Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it may be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

Issues with contemporary sidelink operation of NR UEs are described above, including in the summary section. Before NR UEs may transmit in the unlicensed band, they are expected to perform an LBT procedure in which they perform energy detection to avoid collisions with other systems' signals. In particular, they will be allowed to transmit only if the channel is declared as free after the LBT procedure irrespective of their future reservation. Subsequently, this may put the NR UEs at a disadvantage since they will be required to perform the LBT sensing on top of the Mode 2 resource selection procedure when accessing the unlicensed spectrum. In addition, NR UEs utilize a slot-based frame structure and thus their transmissions are expected to start only at their slot boundaries which may further reduce their chances in acquiring the unlicensed channel before transmission. To resolve these issues with NR SL operation in the unlicensed spectrum, multiple techniques are introduced below, including a new resource reservation technique and architecture based on multi-slots reservations by UEs.

Multi-slot Reservation Architecture and Methods

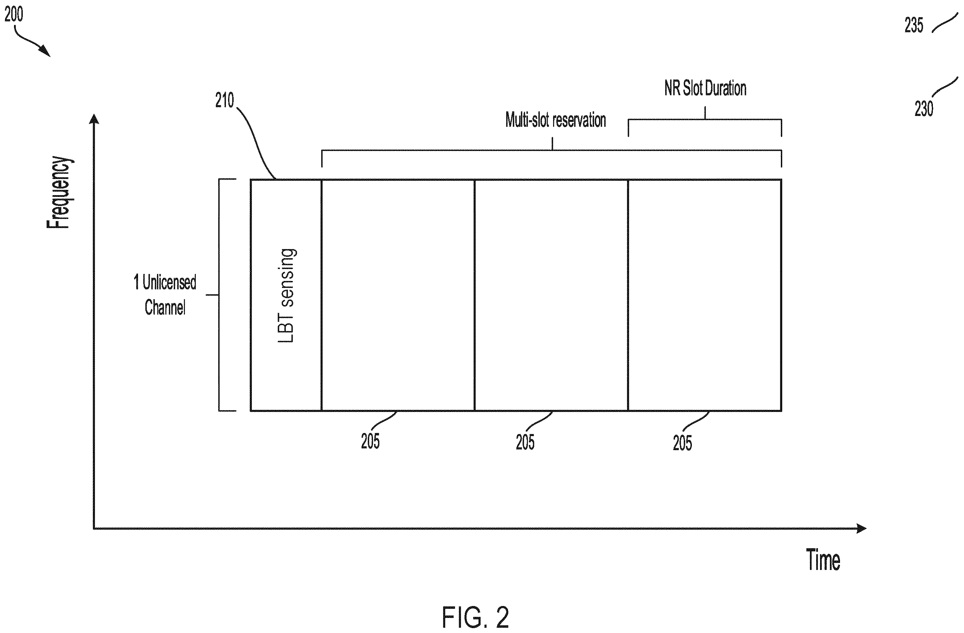

Described herein is a multi-slot reservation approach to reduce the need for performing LBT sensing and allow a UE to transmit either multiple TBs or multiple blind repetitions of the same TB to reduce energy consumption and network traffic, while improving transmission in the unlicensed spectrum. A reservation architecture based on multi-slot reservation systems by an NR UE is described below, including with respect to FIG. 2.

The new multi-slot reservation system may employ an LBT and multi-slot reservation in an unlicensed channel. In such cases, a single LBT sensing operation is done prior to a multi-slot reservation for a plurality of slots by a single UE at future time periods. FIG, 2 depicts the structure of data transmission from a UE for a multi-slot reservation using LBT sensing reservation in the form of data transmitted. FIG. 2 is a diagram illustrating an example multi-slot reservation data transmission from a UE, including LBT sensing, according to various embodiments. Specifically, FIG. 2 depicts a diagram 200 of a reservation transmission sent by a UE as part of an NR sidelink communication. As depicted in diagram 200, multiple slots of the transmission correspond to reservation slots 205, each slot having a uniform NR slot duration and operating on a single unlicensed channel of the frequency spectrum. Temporally preceding the multiple reservation slots is a single LBT sensing block 210 corresponding to a single LBT operation as required by NR UEs utilizing the unlicensed spectrum. It will be appreciated that this new technique of singular LBT performance via the LBT sensing block 210 for a plurality of reservations slots 205 improves upon contemporary methods by reducing the required number of LBT operations while simultaneously allowing for multiple future reservations for a single UE.

The techniques described above allow for reservation of a plurality of NR slots in the unlicensed spectrum while only requiring a single LBT sensing operation and improve NR SL operation in the unlicensed spectrum by permitting multiple slot reservations that would otherwise need to be sent separately with individual LBT operations at each instance. Accordingly, the techniques allow for more consistent and time-efficient NR SL signal transmission while also improving power and resource consumption on UE devices and base stations.

In various embodiments, to utilize the multi-slot reservation techniques described herein, an NR UE may be required to inform neighboring UEs of its future reservations. In furtherance of these techniques, the multi-slot reserving UE may utilize TRIV and FRIV fields in the SCI of NR Rel-16 sidelink to communicate with other UEs. On a similar note, UEs utilizing the multi-slot reservation techniques describe herein are still required to use Mode 2 resource selection procedures when operating in the unlicensed spectrum.

In furtherance of the methods described above, new techniques for the operation of Mode 2 resource selection procedure are further described below. Contemporary Mode 2 sensing utilizes two phases, neither of which is fully-compatible with a multi-slot reservation system. Accordingly, new techniques and methods for phase 1 and phase 2 operation in mode 2 sensing are described below.

**Mode 2** - **Phase 1:** As of NR Rel-16, the first phase (phase 1) of the Mode 2 resource selection procedure evaluates all single-slot resources with enough number of sub-channels and accordingly passes the candidate sub-channels to a higher layer for resource selection in the second phase (phase 2).

To supplement the new techniques described above, the phase 1 of mode 2 will be altered to allow for evaluation of multi-slot candidates. In particular, an additional novel input parameter corresponding to the higher layer (i.e., the number of consecutive slots) will be sent along with other parameters, such as the number of required subchannels and TB priority.

In particular, the altered phase 1 may involve a candidate multi-slot resource for transmission $R_{x,y}$ which is defined as a set of $L_{subCH}$ contiguous sub-channels with sub-channel $x+j$ in slots $t'^{SL}_{y+z}$ where $j = 0,..., L_{subCH} - 1$ and $z = 0,..., N_{slots} - 1$, and $N_{slots}$ is the parameter provided by the higher layer that indicates the number of slots to be used for the PSSCH/PSCCH transmission. The UE will effectively assume that any set of $L_{subCH}$ contiguous sub-channels and $N_{slots}$ contiguous slots included in the corresponding resource pool within the time interval $[n + T_1, n + T_2]$ correspond to one candidate multi-slot resource for UE performing full sensing, in a set of Y candidate slots within the time interval $[n + T_1, n + T_2]$ for UE performing periodic-based partial sensing correspond to one candidate single-slot resource, or in a set of Y' candidate slots within the time interval $[n + T_1, n + T_2]$ for UE performing contiguous partial sensing if $P_{rsvp\_TX}=0$, correspond to one candidate single-slot resource, where

- selection of $T_1$ is up to UE implementation under $0 \leq T_1 \leq T^{SL}_{proc,1}$, where $T^{SL}_{proc,1}$ is defined in slots in Table 8.1.4-2 where $\mu_{SL}$ is the SCS configuration of the SL BWP;
- if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).
- Y is selected by UE where $Y \geq Y_{min}$.
- Y' is selected by UE where $Y' \geq Y'_{min}$. When the UE performs contiguous partial sensing and if $P_{rsvp\_TX} = 0$, if the number of candidate single-slot resources Y' is smaller than $Y'_{min}$, it is up to UE implementation to include other candidate slots.

The total number of candidate single-slot resources is denoted by $M_{total}$.

**Mode 2** - **Phase 2:** Subsequent to the phase one sending of the higher layer parameter, the Mode 2 resource selection procedure will perform an evaluation of the parameters and check each possible reservation slot with the required number of subchannels/slots to determine if it is reserved or not by a neighboring UE with high RSRP level. Subsequently, the unoccupied multi-slot-subchannel blocks will then passed to the higher layer for eventual resource selection. In some embodiments, the MAC layer may randomly select one of the potential candidates for transmission.

In particular, the selected resource is discarded if the subsequent $N_{slots}$ following the one that carries the selected single-slot resource does not have the exact subchannels as unoccupied. For instance, if $N_{slots} = 3$ and the MAC layer randomly selected a single-candidate resource occupying slot X and subchannels 2 and 3, then this resource is not discarded only if slots X+1 and X+2 have subchannels 2 and 3 as unoccupied. The new techniques for phase two may thus operate according to steps of:

- Step 1) Set $N_{trials} = 1$:
- Step 2) Randomly select a resource $R_{x,y}$ from the set of candidate single-slot resources in the set $S_A$.
- Step 3) Identify the starting subchannel, the number of subchannels, the slot index of the selected UE and the value $N_{slots}$.
- Step 4) If resources $R_{x,(y+1)}, R_{x,(y+2)}, \ldots, R_{x,(y+N_{slots}-1)}$ exist within the set $S_A$ then maintain the selected resource$R_{x,y}$; otherwise set $N_{trials} = N_{trials} + 1$ and if $N_{trials} \leq N_{threshold}$ then go back to Step 1.

After selecting a set of consecutive slots for transmission, an NR UE may proceed to transmit on the selected block. Two options may be considered for transmission:

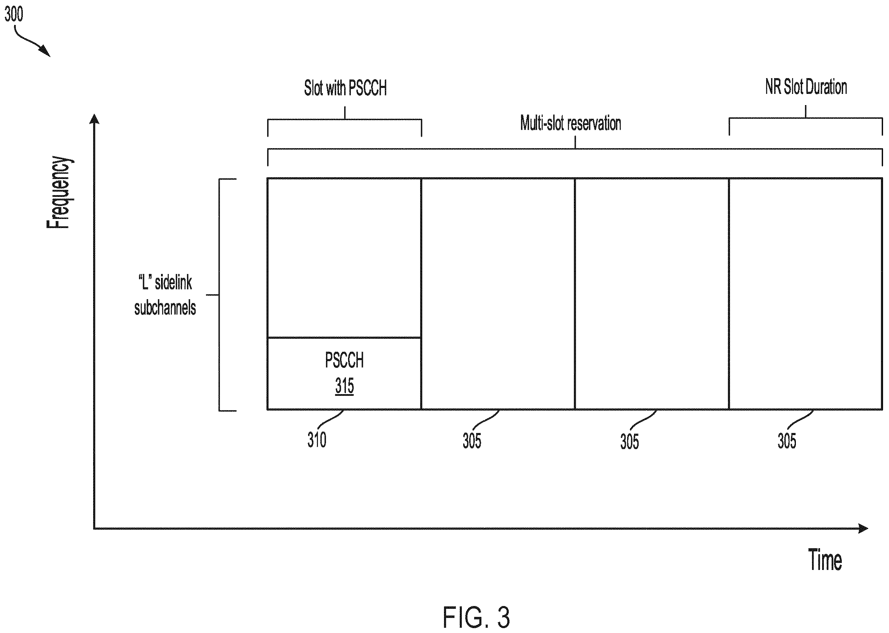

- **The NR UE may treat each slot within the $N_{slots}$-resources separately**: In this case, the NR UE will have multiple single-slot reservations and may use them for sending either the same TB with blind retransmissions or multiple TBs or any combination thereof. In addition, each slot will contain its own PSCCH so that it may be decoded by the Rx UE separately; or
- **The NR UE may treat the multi-slot reservation jointly:** In this case, the PSCCH may exist only on the lowest subchannel index and the lowest slot index (i.e., the earliest slot) within the multi-slot/multi-subchannel resource block as shown in Figure 3.

FIG. 3 is a diagram illustrating an example multi-slot reservation data transmission from a UE, utilizing a PSCCH slot including a PSCCH-only first slot technique, according to various embodiments. Specifically, FIG. 3 depicts a diagram 300 of a reservation transmission sent by a UE as part of an NR sidelink communication. As depicted in diagram 300, multiple slots of the transmission correspond to reservation slots 305, each slot having a uniform NR slot duration and operating on a length, "L" of unlicensed channel of the frequency spectrum. As depicted in FIG. 3, the first temporal slot 310 of the transmission includes a PSCCH block 315 on the lowest sub-channel index. Specifically, the PSCCH inclusion in the first temporal slot allows subsequent slots in corresponding slots to be used for data transmission.

The PSCC-aligned techniques depicted in FIG. 3 accordingly facilitates multi-slot reservation techniques while reducing the overhead due to the PSCCH resources in subsequent slots being free the use for data transmission. In addition, the decoding complexity at the Rx UEs is further reduced due to the PSCCH in the subsequent slots no longer needing to be decoded.

To signal the multi-slot reservation with a single PSCCH, an NR UE may use either the 1st or 2nd stage SCI or a MAC CE. In the case of using the 1st or 2nd stage SCI, the NR UE may rely on the TRIV and FRIV fields of the 1st stage SCI to indicate the multi-slot/multi-subchannel block size and use either explicit or implicit indication of the presence of the PSCCH only in the 1st slot. This may be performed in several ways:

- **Option 1)** by adding an additional 1-bit field to the 1st or 2nd stage SCI. In such a case, the 1-bit field indicates if the transmission is multi-slot or not;
- **Option 2)** by using a new 2nd stage SCI format. This solution offers full flexibility to indicate the multi-slot transmission; or
- **Option 3)** by setting one or more fields of the 1st or 2nd stage SCI to reserved values. For example, by setting the period field in the 1st stage SCI to a preconfigured value per resource pool, it may be used to indicate that this reservation is a multi-slot reservation.

It will be appreciated that the number of slots within a multi-slot reservation may be configured per resource pool. Accordingly, the TRIV and FRIV operations will indicate only the reservation in the current slot, whereas the subsequent slots will also be considered as part of the multi-slot reservation based on the resource pool configuration. For example, if a hypothetical multi-slot reservation duration is configured to "3" in the resource pool if an NR UE reserves only Subchannel Y in slot X and indicates in its SCI that this is a multi-slot reservation (e.g., implicitly by using the period field), then subchannel Y will also be considered as reserved in slots X+1 and X+2.

Alternatively, by resource pool configuration, the multi-slot duration may also be indicated by the TRIV and FRIV fields in the form of an interval. For example, if a UE uses the TRIV to indicate a reservation that is "3" slots away, then based on the resource pool configuration, all slots between the current and the future indicated slot(s) will be considered as part of the multi-slot reservation. For example, if an NR UE reserves slot X and slot X+3 by using its TRIV while indicating a multi-slot reservation, then neighboring UEs may consider that slots X+1 and X+2 are also part of the multi-slot reservation.

The ability to perform multi-slot reservation in unlicensed spectrum may also be enabled/disabled by resource pool configuration and may be applicable only when the UE is transmitting in an unlicensed spectrum. It will be appreciated that the absence of the PSCCH in subsequent slot does not necessarily mean the absence of the 2nd stage SCI in subsequent slots within the block due to the 2nd stage SCI format being needed to identify the HARQ process ID in case of sending multiple TBs or the redundancy version in case the same TB is repeated. A new 2nd stage SCI format may be used to reduce the overhead since some fields not need be repeated (e.g., the source UE ID). In addition, the presence of the reserved multi-slot resource may also be indicated by the MAC CE. This may be done in combination of the TRIV and FRIV fields as follows:

- Option 1) the UE may use the TRIV and FRIV to indicate future resource reservations that are consecutive in time and are at least X slots away to allow for processing latency; or
- Option 2) the UE includes a MAC CE in its TB to indicate that the two future reservations indicated by the SCI will be treated jointly (i.e., it represents a multi-slot reservation with reduced PSCCH).

In various embodiments, a multi-slot resource reservation may be enabled by resource pool configuration when operating in unlicensed spectrum to combat LBT failures. In various embodiments, phase 1 of the mode 2 resource procedure provides multi-slot candidates to the higher layer for resource selection in order to combat LBT failures persistent in convention technologies.

In various embodiments, phase 2 of the mode 2 resource selection procedure operates such that the higher layer end up selecting multiple consecutive single-slot candidates to obtain a multi-slot resource reservation in order to combat LBT failures. In various embodiments, each slot within the multi-slot resource reservation may be used separately wherein each slot will have its own respective PSCCH signaling.

In various embodiments, slots within the multi-slot reservation may be jointly used in the sense that PSCCH may be sent only in the first slot to reduce overhead. The indication of a single PSCCH for the multi-slot reservation may be carried in the 1st or 2nd stage SCI or as a MAC CE. In various embodiments, the 2nd stage SCI may either exist or not in subsequent slots within the multi-slot reservation based on resource pool configuration.

In various embodiments, a new 2nd stage SCI for multi-slot reservations is utilized to reduce the overhead and avoid the transmission of redundant information (e.g., the Tx UE ID). In various embodiments, if A MAC CE is used to indicate the future multi-slot reservation, then enough time separation for processing is allowed between the slot indicating the future multi-slot reservation and the starting of the multi-slot reservation.

The multi-slot reservations may also be utilized to facilitate COT sharing between Tx and Rx UEs. In particular, if a Tx UE reserves a multi-slot block and indicates the COT sharing in the PSCCH sent in the first slot, then the Rx UE will have adequate time to process the COT sharing indication and accordingly transmit. In particular, during the multi-slot block, the Tx UE will be able to maintain the channel due to its contiguous transmission thus allowing enough processing time for the Rx UE to receive the COT sharing indication and generate the TB.

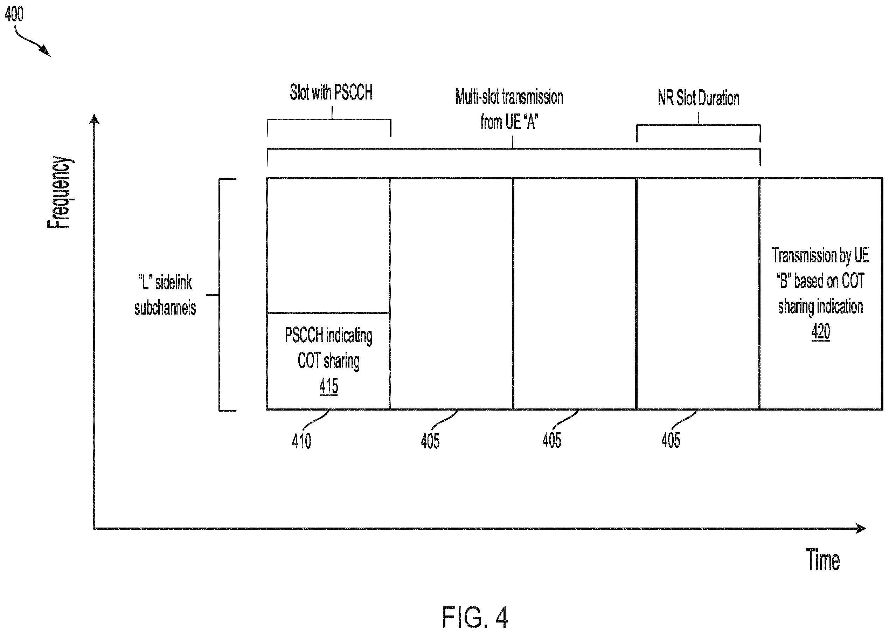

FIG. 4 is a diagram illustrating an example multi-slot reservation data transmission from a UE, wherein a PSCCH indicates a COT sharing operating as part of an initial data block according to various embodiments. Specifically, FIG. 4 depicts a diagram 400 of a reservation transmission sent by a UE as part of an NR sidelink communication. As depicted in diagram 400, multiple slots of the transmission correspond to reservation slots 405 from a UE "A", each slot having a uniform NR slot duration and operating on a length, "L" of unlicensed channel of the frequency spectrum. As depicted in FIG. 4, the first temporal slot 410 of the transmission include a PSCCH indicating COT-sharing block 415 on the lowest sub-channel index. This may be similar to the diagram in FIG. 3, however, with the difference that the PSCCH now includes an indication for facilitating COT-sharing. Additionally, and in-line with the COT-sharing techniques described herein, a COT-sharing block is included at the last temporal slot 420, wherein the last temporal slot 420 includes a transmission shared by UE "B," which is engaged in COT-sharing with UE "A."

In various embodiments, the COT-sharing indication is sent on a dedicated channel designed to provide enough processing time to the Rx UE to generate the feedback (e.g., similar to the PFCH for LTE). In this case, the Tx UE may perform the LBT, acquire the channel, then send the COT sharing indication to the Rx UE to notify it to prepare its feedback and accordingly share the COT. In various embodiments, an NR UE may send a COT sharing indication in the PSCCH that is sent in the first slot within the multi-slot reservation to allow enough time for the Rx UE to process the COT sharing indication and generate its TB.

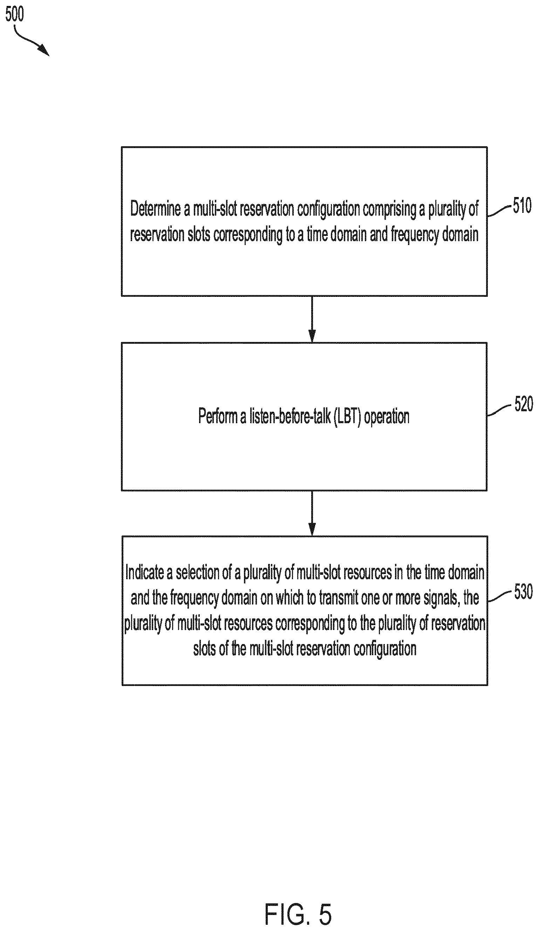

FIG. 5 is an example flow diagram for multi-slot reservation methods according to various embodiments. Process 500 of FIG. 5 begins at 510 by determining a multi-slot reservation configuration, the multi-slot reservation configuration comprising a plurality of reservation slots corresponding to a time domain and frequency domain.

The process continues at 520 when a listen-before-talk procedure is performed. Following the listen before talk procedure at 520, an indication is performed of a selection of a plurality of multi-slot resources in the time domain and the frequency domain on which to transmit one or more signals, the plurality of multi-slot resources corresponding to the plurality of reservation slots of the multi-slot reservation configuration.

The steps of process 500 may be performed, for example, by an NR UE operating in the unlicensed spectrum. For example, the NR UE may perform the steps above as part of a method of reserving 5G NR resources in the unlicensed spectrum for sidelink operations.

Simplified Mini-Slot Approach to Combat LBT Failure

NR UEs are expected to perform an LBT procedure before transmitting in the unlicensed spectrum, in which they perform energy detection to avoid collisions with other systems' signals. In particular, NR UEs are allowed to transmit only if the channel is declared as free after the LBT procedure, irrespective of their future reservation. To achieve this, NR UEs are required to perform LBT sensing before the slot in which they intend to transmit in. However, a major drawback of this procedure is that NR UEs operate based on a slot-based approach and thus they perform sensing only at the slot boundary which reduces their chances of acquiring the channel when compared to other systems.

To address this drawback, techniques are described herein for a mini-slot approach to allow NR UEs to start their LBT earlier in time, and then accordingly transmit by using a new mini-slot structure to acquire the channel until they reach their reserved slot. A mini-slot approach as described herein will allow NR UEs to perform blind decoding for the PSCCH more than once per slot to resolve deficiencies in the contemporary art. In various embodiments, NR UEs are further configured to transmit in a subset of the sub-channels within the "mini-slot" to reduce the number of blind decoding attempts required by NR UEs. The size of this subset may be pre-configured per resource pool.

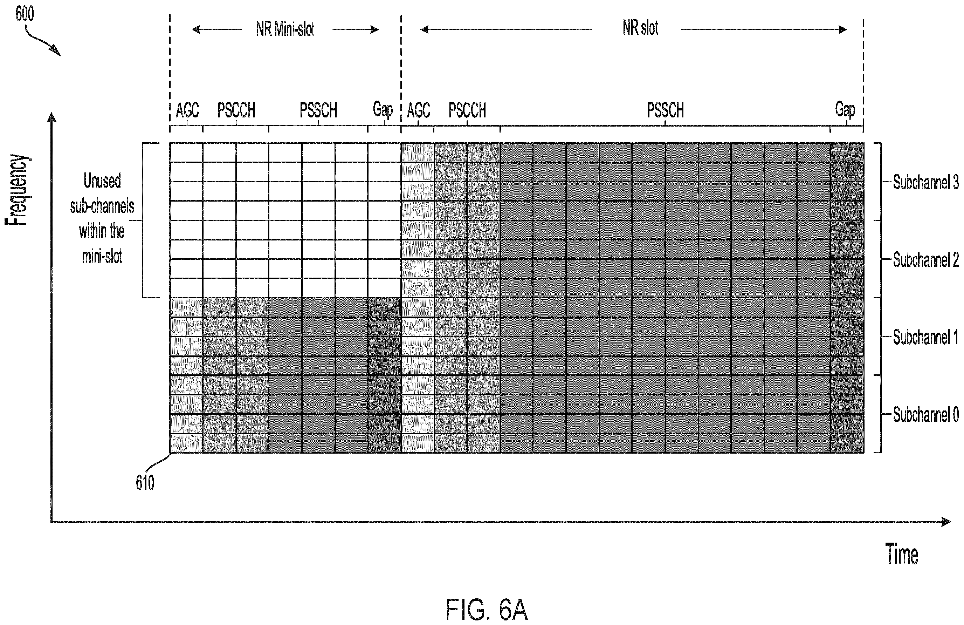

FIG. 6A is a diagram illustrating an example structure for mini-slots transmission configurations, including lesser numbers of sub-channels according to various embodiments. The new mini-slot approach allows for the reduction of processing overhead at Rx UEs while maintaining stable and reliable connectivity. Specifically, FIG. 6A depicts a diagram 600 of a transmission 610 sent by a UE as part of an NR sidelink communication. As depicted in diagram 600, the transmission 610 is made up of a series NR mini-slots temporally preceding a regular-length NR slot. Each of the slots includes a number of subchannel indexes along the frequency length of the transmission, specifically, sub-channels 0-3. It will be appreciated that the use of the NR Mini-slot reduces the need for blind decoding attempts that would otherwise be required if the regular length NR slot were to be used in isolation.

As depicted in FIG. 6A, a series of sub-channels (specifically sub-channels 2-3) are unused within the mini-slot, while a separate series of sub-channels (specifically subchannels 0-1) are used for AGC, PSCCH, PSSCH, and gap signaling. Succeeding the NR Mini-slot, the regular length NR slot utilizes each of sub-channels 0-3 for AGC, PSCCH, PSSCH, and gap signaling. Also, as depicted, in FIG. 6A, RBs are shown to be contiguous in frequency. In some embodiments, without loss of generality, RBs may be interlaced to meet the OCB requirement for unlicensed operation. In addition, the number of (pre- )configured sub-channels that will be monitored within the mini-slot may also be dependent on a priority. In particular, two subsets may be (pre-)configured wherein the first subset is used by high priority UEs and is monitored by all neighboring UEs that use the resource pool whereas the second subset is used by lower priority UEs and might be monitored by some of neighboring UEs, but not all of them (e.g., depending on their capability or power level). This further improve operation of the mini-slot approach by reducing the complexity of the PSCCH monitoring while increasing the chances of NR UEs with higher priority transmissions being able to reach their neighboring UEs. In various further embodiments, the sub-channels that may be used to carry the PSCCH are restricted, as shown in FIG. 6A.

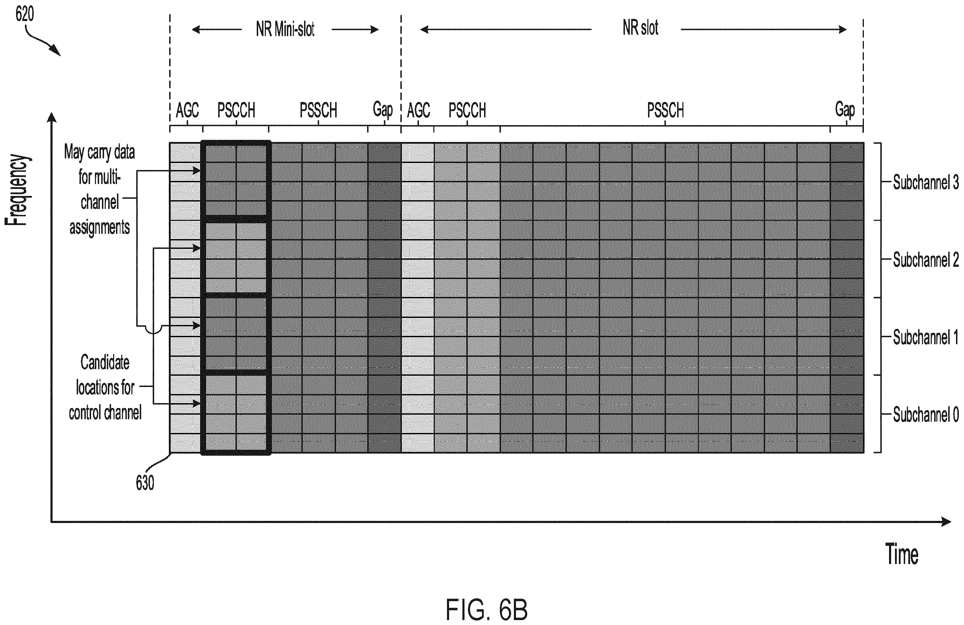

FIG. 6B is a diagram illustrating an example structure for mini-slots transmission configurations, including fewer candidate sub-channels for sending a PSCCH, according to various embodiments. Specifically, FIG. 6B depicts a diagram 620 of a transmission 630 sent by a UE as part of an NR sidelink communication. As depicted in FIG. 6B, subchannels 1 and 3 may be used to carry data in case of multi-channel assignments, and subchannels 0 and 2 may potentially be used as control channels and are otherwise restricted for carrying PSCCH information as part of the transmission 630.

According to the techniques depicted in FIG. 6B, the resource pool may be configured such that the PSCCH may only be sent on sub-channels with even index (i.e., every other subchannel). In various embodiments, delayed PSCCH is utilized. In particular, a UE may use the mini-slot to send PSSCH without any PSCCH. For instance, if a mini-slot size is configured with hypothetical size of 7 symbols, then a UE may use the 7 symbols to send PSSCH data. Subsequently, the UE then transmits in the following slot a PSCCH followed by the remaining payload in the PSSCH as depicted in FIG. 6B.

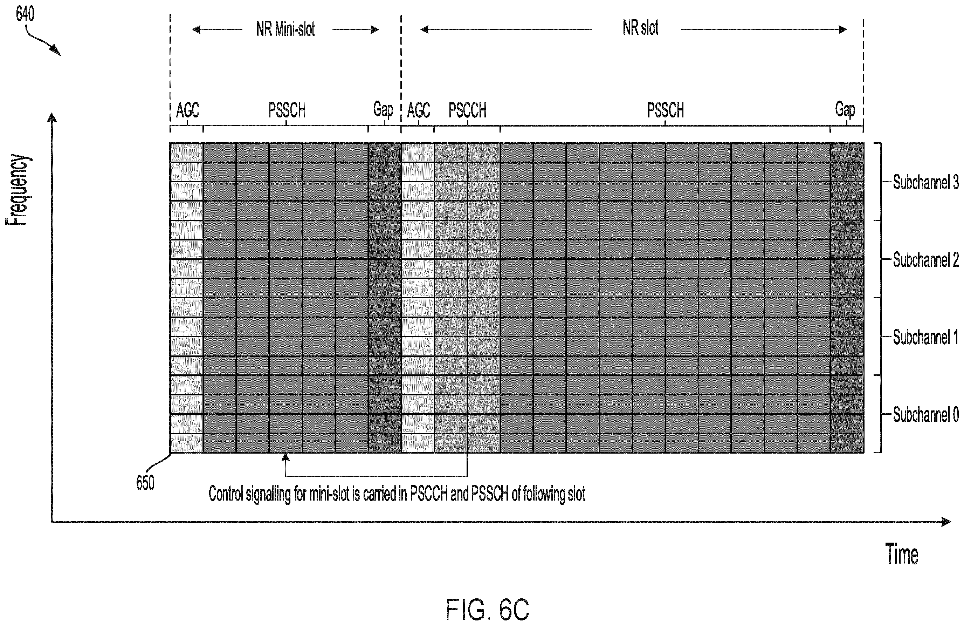

FIG. 6C is a diagram illustrating an example structure for mini-slots transmission configurations, wherein PSCCH is carried in a modified sidelink format. Specifically, FIG. 6C depicts a diagram 640 of a transmission 650 sent by a UE as part of an NR sidelink communication. As depicted in diagram 640, the regular-length NR slot carries control signaling information for the preceding mini-slot in the PSCCH slot. It will be appreciated that the information may also be carried in the PSSCH slot, or in both slots as well.

In the embodiments depicts in FIG. 6C, with respect to PSCCH, a UE may indicate that the UE used the mini slot approach and accordingly it may jointly decode the payload in the mini-slot along with the symbols within the PSSCH. This indication may happen either in the 1st or 2nd stage SCI by adding an additional one-bit field, or by using a new 2nd stage SCI format, or by setting one or more fields within the 1st or 2nd stage SCI to pre-defined values.

This mini-slot approach improve transmissions by NR UEs by reducing the number of blind decoding attempts performed by NR UEs to detect the PSCCH, while also allowing the NR UEs to transmit useful information when LBT is successful before the slot boundary.

In various embodiments, mapping between the sub-channels used in the reserved slots and the ones used for the mini-slot may be dependent on resource pool configuration. In particular, if no frequency multiplexing is allowed between NR UEs transmitting in the unlicensed spectrum, then the NR UE may transmit on all the configured sub-channels within the mini-slot. Alternatively, if frequency multiplexing of NR UEs' transmissions is allowed, then there may exist a mapping between the subchannels used in the regular slot and the ones used in the mini-slot. In various embodiments, mapping involves restricting NR UEs transmissions to sub-channels that are overlapping with the channels that a UE has already selected for its intended transmission.

In an example of the above, if an NR UE selected sub-channels 2,3,4 for transmission at slot "X", but the NR UE was also able to acquire the channel at a mini-slot that precedes slot "X" with pre-configured subset of subchannels (1,2, and 3), then the UE may use only the overlapping sub-channels (i.e., subchannels 2 and 3). This mapping also applies to the case in which PSCCH is not sent in the mini-slot, though an indication similar to the FRIV field may be included in the 1st or 2nd stage SCI or as a MAC CE to indicate the location of the sub-channels used for the transmission to maintain consistent function.

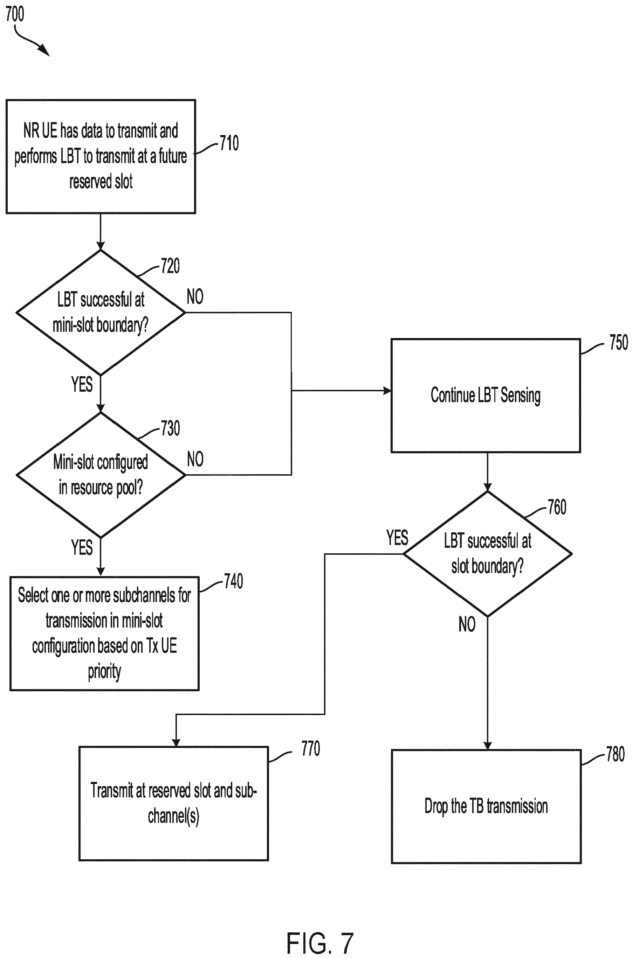

FIG. 7 is an example flowchart for implementing mini-slot configurations according to various embodiments. As depicted in FIG. 7, process 700 begins at 710 when an NR UE has data to transmit and accordingly perform LBT to transmit at a future reserved slot. Subsequently, as 720, a determination is made as to whether the LBT operation was successful with respect to the mini-slot boundary. If not, LBT sensing continues at step 750. If, instead, the LBT operation was successful at 710, a determination is performed at 730 as to whether the mini-slot is configured in a resource pool. If it is, at 740 one or more sub-channels for transmission in mini-slot based on Tx UE priority are selected. If, instead, the mini-slot is not configured in a resource pool, LBT sensing continues at step 750. Following LBT sensing, either at step 750, a determination is made at 760 as to whether the LBT was successful at a regular-length slot boundary. If not, the transmission is dropped at 780. If, instead, there was success at the regular-length slot boundary, the UE will begin transmission at the corresponding reserved slot and subchannels.

In various embodiments, mini-slot devices may be configured per resource pool to increases the chances of NR UEs of having a successful LBT. The number of accessible sub-channels within these mini slots may be reduced to decrease the complexity associated with PSCCH blind decoding. In various embodiments, a resource pool may be configured such that PSCCH transmissions in mini-slot may occur only on a subset of the available sub-channels (e.g., even indexed sub-channels).

In various embodiments, the number of accessible sub-channels during the mini-slots may be dependent on priority wherein the sub-channels accessible by higher priority UEs are monitored by all neighboring UEs. In various embodiments, transmissions within the mini-slot may be limited only to PSSCH (i.e., there is no PSCCH). The subsequent slot is then used to carry the PSCCH needed to decode the mini-slot. In various embodiments, the indication of the presence of payload in the mini-slot may be carried either in 1st or 2nd stage SCI explicitly by adding a new field or implicitly by setting one or more fields to pre-defined values.

COT Sharing for PSFCH Transmissions

In NR transmissions with feedback enabled, an Rx UE is expected to send an ACK/NACK sequence in the PSFCH based on whether it was able to correctly receive the TB or not. However, sending this ACK/NACK would require the UE to perform an LBT with no guarantee of successful channel acquisition. Described herein are new techniques to address this drawback, including a method for COT sharing wherein the Tx UE may schedule two blind transmissions that are separated enough to allow the Rx UE to perform processing and send the ACK/NACK by doing COT sharing with the Tx UE after the second blind transmission. In this case, the PSCCH scheduling the blind retransmission will also include a COT sharing indication to allow the Rx UE to share the COT and provide the feedback as shown in the figure below.

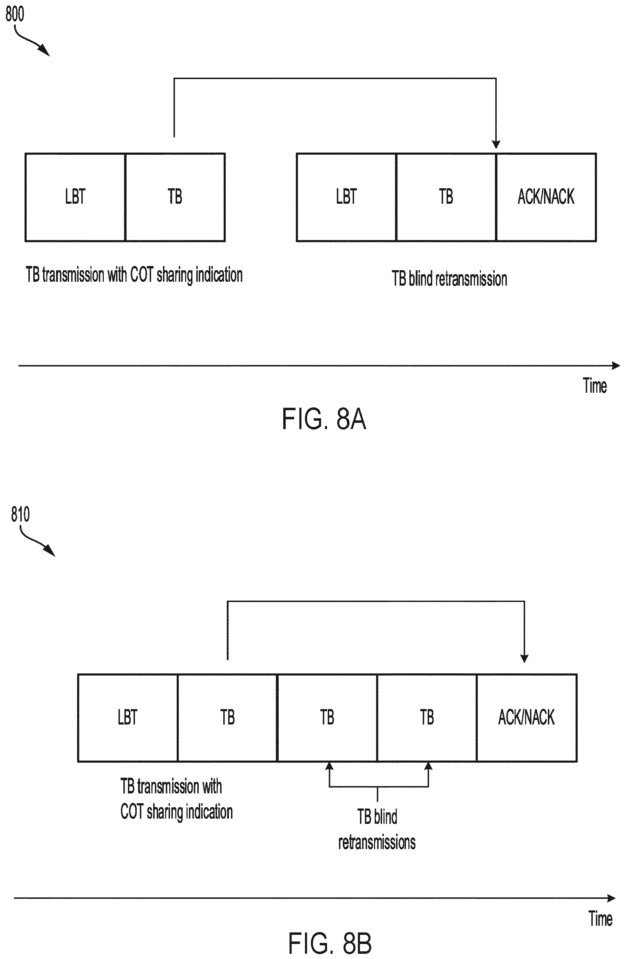

FIG. 8A is an example diagram depicting an example blind retransmission structure for ACK/NACK feedback, according to various embodiments. Specifically, FIG. 8A depicts a diagram 800 in which a Tx UE is performing blind retransmission and COT sharing to assist an RX UE with channel acquisition for ACK/NACK feedback. As depicted in FIG 8A, the Tx UE performs another LBT and a TB blind retransmission just before sharing the COT with the Rx UE to send its ACK/NACK feedback. On the other hand, as in FIG 8B, the Tx UE performs multiple blind repetitions to maintain the COT until it is able to share it with the Rx UE to send its ACK/NACK feedback (i.e., there is only one LBT sensing for TB transmissions/retransmissions and ACK/NACK feedback).

According to the methods above, the blind transmission is separated by at least "X" slots to allow for the Rx UE to decode the PSCCH/PSSCH and generate its ACK/NACK. The value of "X" may be pre-configured per resource pool and may be dependent on subcarrier spacing. Alternatively, the Tx UE may contiguously maintain the channel and send multiple blind retransmissions of the same TB and then share the channel with the Rx UE to reduce the chances of LBT failures before the PSFCH and increase the ability of the Rx UE to provide its ACK/NACK feedback as depicted in FIG. 8B.

FIG. 8B is an example diagram depicting an example contiguous blind retransmission structure for ACK/NACK feedback, according to various embodiments. Specifically, FIG. 8B depicts a diagram 810 in which a Tx UE is performing blind contiguous retransmission and COT sharing to assist an RX UE with channel acquisition for ACK/NACK feedback. As depicted in FIG. 8B the Tx UE performs multiple blind repetitions to maintain the COT until it is able to share it with the Rx UE to send its ACK/NACK feedback (i.e., there is only one LBT sensing for TB transmissions/retransmissions and ACK/NACK feedback).

PSCCH scheduling of a blind retransmission may also include a COT sharing indication to allow the Rx UE to share the COT and provide the feedback. The number of blind retransmissions may be selected such that the PSFCH resource and the first TB transmission are separated by at least X slots to allow enough time for Rx UE processing (the value of X may be pre-configured per resource pool and may be dependent on the subcarrier spacing).

Blind retransmissions discussed herein may be limited only to UEs with high priority TBs (i.e., above a pre-configured priority threshold per resource pool) or in scenarios when CBR is above a threshold (i.e., a pre-configured threshold that may be dependent on priority) or when an NR UE has failed in acquiring the channel due to LBT failure a given number of times within a given duration. Despite the advantages of these approaches, they will require the NR UE to

- 1) perform multiple blind retransmissions which might not be needed;
- 2) obtain an ACK/NACK only for the first blind transmission and not subsequent ones; or
- 3) perform another LBT if the retransmissions are separated by one slot or more which might not be successful and thus the Rx UE might receive an indication of COT sharing that is not valid.

To address these drawbacks, an Rx UE might be required to perform its LBT independently without any COT sharing with the Tx UE and thus there is no guarantee that it will be able to acquire the channel especially that the PSFCH suffers from the following disadvantages due to LBT sensing when compared to regular sidelink transmissions:

- the slot in which the PSFCH resources are allocated may be occupied by another UE and thus the LBT sensing will occur only over one OFDM symbol (i.e., the gap symbol);
- following the Rel-16 sidelink approach, each UE will have only one opportunity to send its ACK/NACK feedback in the PSFCH channel; or
- if a UE is allowed to send its ACK/NACK feedback over multiple PSFCH instances, the slot that carries the PSFCH may occur every forth slot and thus if a UE fails to clear its LBT it might incur large delays until the next PSFCH occasion.

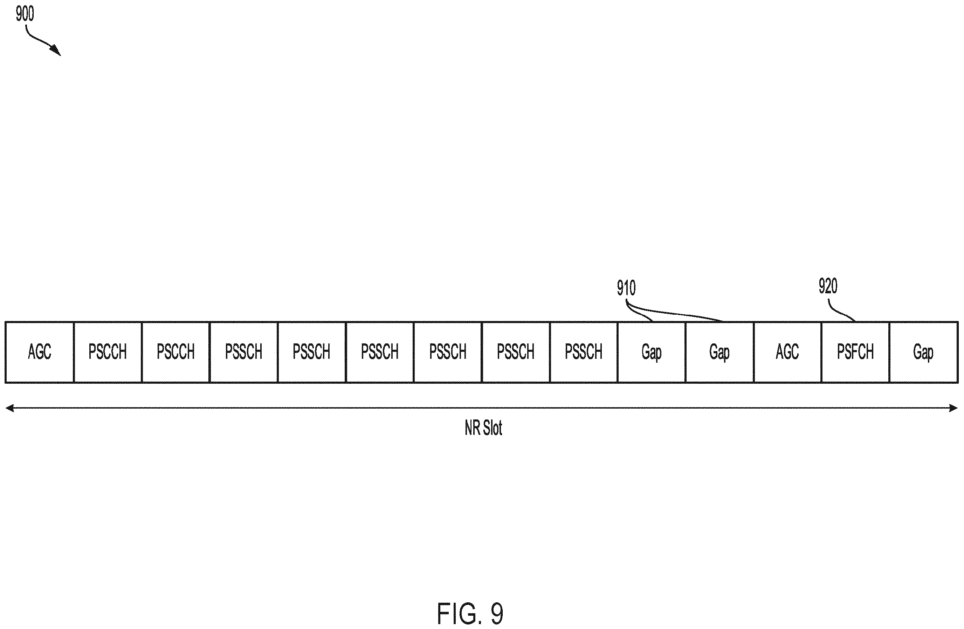

Accordingly the novel techniques for COT sharing describing herein may utilize a different frame structure when operating in the unlicensed band. In particular, the gap before the PSFCH channel may be configured with increased resources to allow Rx UEs to perform LBT sensing based on their randomly selected contention window size as shown in FIG. 9.

FIG. 9 is an example diagram depicting NR sidelink slots with gap symbols before PSFCH slots, according to various embodiments. Specifically, FIG. 9 depicts a diagram 900 of an NR sidelink slot configuration including 2 gap symbols before PSFCH is performed. For example, as depicted in FIG. 9, two gap blocks 910 indirectly precede the PSFCH block 920. The temporal gap between the PSSCH blocks and the PSFCH block 920 may thus allow Rx UEs to perform LBT sensing with respect to a random contention window size before the PSFCH is signaled via the PSFCH block 920.

In various embodiments, a Tx UE may perform one blind retransmission for a transmitted TB with a COT sharing indication in the first transmission to assist the Rx UE in acquiring the channel and sending the ACK/NACK feedback. In various embodiments, blind retransmission is separated by at least X slots to allow the Rx UE to process the TB and generate the ACK/NACK (X is pre-configured per resource pool).

In various embodiments, a Tx UE may perform multiple consecutive blind retransmissions of the transmitted TB to maintain the channel. The first transmission may include a COT sharing indication to allow the RX UE to share the channel and send its ACK/NACK feedback. In various embodiments, the blind retransmissions may be limited only to UEs with high priority TBs (i.e., above a preconfigured priority threshold per resource pool) or in scenarios when CBR is above a threshold or when an NR UE has failed in acquiring the channel due to LBT failure a given number of times within a given duration.

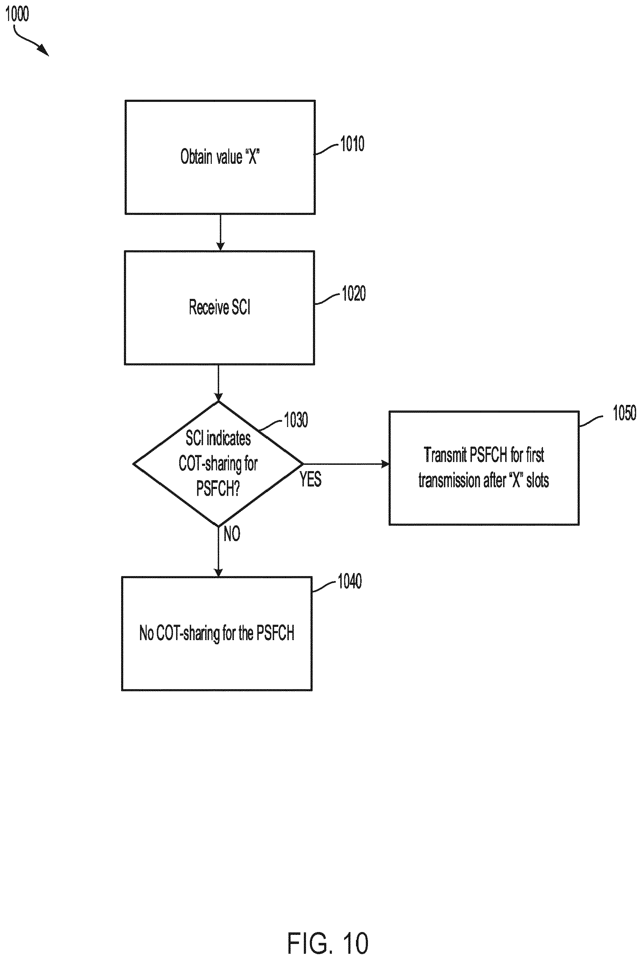

In various embodiments, a new sidelink slot structure should be adopted for sidelink communication in unlicensed spectrum when PSFCH is present. The new structure includes a longer gap before the PSFCH to allow the NR UE enough time to perform its LBT and acquire the channel to send its ACK/NACK. In various embodiments, the PSCCH (or second stage SCI) contains a field to indicate whether COT-sharing for PSFCH is allowed; if this field indicates COT-sharing, the COT-sharing occurs for the first retransmission indicated in the TRIV field that is at least X slots after the transmission in the current slot. The logic for the UE receiving the packet may proceed according to the process flow depicted in FIG. 10.

FIG. 10 is an example flowchart for UE operations for receiving packets in COT sharing situations involving PSFCH, according to various embodiments. As depicted in FIG. 10, process 1000 begins at 1010 when an NR UE obtains a value of "X." This value of X will be used later, and may correspond to:

- a hard-coded value that is the same for all UEs;
- a UE-specific value, such as a UE value that the Tx UE is aware corresponding to a Rx UE. For example, an earlier RRC signaling exchange on the PC5 interface may make the Tx UE aware of this value from the Rx UE;
- a pre-configured value per a resource pool; or
- a value configured dynamically by a resource pool.

At 1020, the UE receives SCI information. For example, the UE may then receive a grant indication and check if there is an indication for COT-sharing for the PSFCH. The indication may be, for example:

- a new field, either in the first or second-stage SCI; or
- a remapped existing filed. For instance, there currently is in SCI1-A a field to indicate whether the PSFCH is present or absent in this slot. This field would now indicate whether there is COT-sharing for PSFCH or not.

At 1030, a determination is made as to whether the received SCI indicates that COT-sharing for PSFCH is enabled. If the SCI does not indicate COT-sharing, then at 1040, no COT-sharing is performed for the PSFCH, and the UE either does not transmit the PSFCH, or transmits the PSFCH using alternative rules.

If, instead, the SCI indicates COT-sharing, then at 1050, the PSFCH is transmitted for first transmission after "X" slots. In this case, "X" is the value determined in 1010 and will correspond to the number of slots before the PSFCH is transmitted. More specifically, if COT-sharing is indicated, the UE then determines on which slot to perform COT-sharing for the PSFCH. For instance, the COT-sharing could apply:

- the next transmission indicated by the TRIV field;
- the first future transmission indicated by the TRIV field that is at least X slots from the current slot; or
- a future pre-determined slot (e.g., Y slots after the SCI is received). Alternatively, the slot in which to perform COT-sharing may be indicated in the SCI, either in the first or second-stage.

The UE then prepares its PSFCH and transmits it using the COT-sharing rules in the determined slot.

Operating of In-Band Emissions in Case of Interlacing

In NR sidelink unlicensed operation, interlacing may be utilized to fulfil the OCB requirement of transmissions in the unlicensed spectrum. In particular, to perform a transmission in an unlicensed spectrum, an NR UE is expected to occupy at least 80% of the channel bandwidth. To achieve this goal for TB transmissions with a limited number of subchannels, one possibility is to rely on an interlacing structure, in which the RBs within a subchannel are not contiguous to maintain the channel occupancy.

Despite the advantages of this approach, there is an increase the impact of in-band emissions when transmissions of multiple NR UEs are frequency multiplexed. For example, if two NR UEs are transmitting and they use interlacing indexes 1 and 2 then they will suffer from in-band emissions on all their RBs. On the other hand, if these two UEs were to transmit in a legacy Rel-16/Rel-17 sidelink system in which sub-channels consist of contiguous RBs, they would have suffered from in-band emissions in a limited number of RBs that are at the boundary of their sub-channels.

To address these shortcomings, described herein are new techniques for operation of in-band emissions when interlacing is utilized. In various embodiments, gaps are introduced between subsequent interlacing indexes in the frequency domain to reduce the impact of in-band emissions. The number of RBs within each gap may be configured per resource pool. In addition, when interlacing the RBs they may be divided into contiguous subgroups rather than single RBs to reduce the overhead and the incurred in-band emissions.

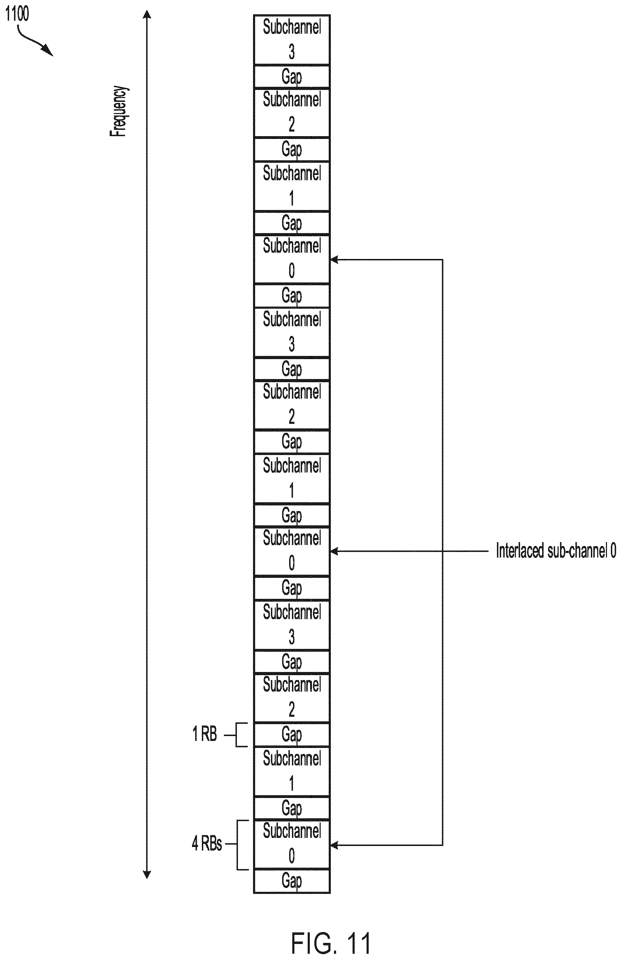

The number of RBs within each subgroup may be configured per resource pool. For example, if there exists 61 PRBs in the system and 4 sub-channels, then each subchannel may be interlaced into groups of 4 of RBs with one RB gap between any two consecutive transmissions belonging to different RBs as shown in FIG. 11.

FIG. 11 is an example diagram depicting interlacing of sidelink sub-channels in unlicensed bands to meet OCB requirements, wherein contiguous RBs are used to reduce overhead and gaps are used to reduce in-band emissions, according to various embodiments. Specifically, FIG. 11 depicts a diagram 1100 of a transmission configuration utilizing interlaced sub-channels over a particular frequency channel of the unlicensed spectrum. For example, interlaced slots of sub-channel 0 are each 4 resource blocks wide in the frequency, as depicted in FIG. 11. In addition to the interlaced blocks of sub-channels 0-3, gaps of 1 resource block are added between them to reduce the impact of in-band emissions.

To decrease the overhead resulting from the in-band emission reduction gaps, an NR UE may be allowed (based on resource pool configuration) to skip the gaps and use their RBs for data transmission when it intends to occupy multiple adjacent interlaces for its transmission. The same interlacing approach discussed above may also be applied on the subcarrier level to improve operations thereto.

In various embodiments, to address the problem of in-band emissions while still meeting the OCB requirement of unlicensed band, an NR UE might rely on an interlaced subchannel approach wherein a sub-channel's RBs are divided into smaller subgroups and spread across the spectrum. In various embodiments, the number of RBs within a subgroup may be configured per resource pool.

In various embodiments, to further reduce the in-band emissions, gaps may be introduced between subgroups used by different RBs wherein the number of RBs in each gap is configured per resource pool. In various embodiments, to reduce the overhead, the gaps between adjacent interlaces are not considered if the same UE uses multiple adjacent interlaces for its transmission.

Additional new techniques to combat in-band emissions in case of interlacing avoid the power imbalance between neighboring UEs. In particular, the negative impact of in-band emissions is magnified when two UEs are using adjacent interlacing subchannels and have a significant difference in their power levels. In the current Mode 2 resource selection procedure of Rel-16, resources are excluded from the list only if they are occupied by a neighboring UE with high RSRP level above a certain threshold. However, it does not take into consideration the power level of adjacent resources. In various embodiments, resource selection assistance information coming from the Rx UE in relied upon after measuring the RSRP level of their SCIs. In particular, the following may be considered for resource selection assistance schemes 1 and 2:

Scheme 2: According to scheme 2, an Rx UE that detects a resource reservation conflict between two UEs will use the PSFCH to request the UE with the lower priority to perform a resource reselection and accordingly leave the channel. In the current Rel-17 procedure, the trigger for the resource reservation conflict is the presence of another UE that has selected an overlapping resource with an RSRP above a threshold. However, when interlacing is considered, the trigger for the resource conflict indication to include adjacent sub-channels as well.

According to various embodiments, when the Rx UE is evaluating whether to provide a conflict indication or not, consider is given to the RSRP levels of the current interlaced subchannel and the adjacent ones as well. For example, if a Tx UE B reserved interlaced subchannel M in a future slot X and has an RSRP level R_1 and a lower priority Tx UE C reserved interlaced subchannel M+1 and has an RSRP level R_2 to an Rx UEC as shown in figure below. The Rx UE then will check that the value ($M=\log_{10} R_1/R_2$) is within a specific range. This range may be pre-configured per resource pool and may be dependent on priority. If the value falls within the pre-configured range then no action is taken at the Rx UE side. On the other hand if the ratio is out of range, then the assisting UE will send an indication of a future conflict using the PSFCH to the UE with the lower priority level.

Scheme 1: In this scheme, an Rx UE will provide assistance information in the form of a set of preferred or non-preferred resources to a neighboring UE to use in its upcoming transmission. The transmission of this assistance information may be either triggered by an assistance request or by a set of pre-configured triggering conditions. This assistance information is obtained by performing sensing at the assisting UE side. In the case of scheme 1, there may be three subcases to considered as follows:

**Scheme 1, subcase 1:** The trigger for sending the assistance information was an assistance request from a neighboring UE. In this case, the RSRP level of the neighboring UE requesting the assistance would be known after decoding the SCI carrying the assistance request. Subsequently, the assisting NR UE may perform its Mode 2-based sensing to identify the set of resources reserved by its neighboring UEs based on their received SCIs and measure their corresponding RSRP levels.

An additional condition will be added when selecting the preferred/non-preferred resource sets. In particular, when evaluating whether a resource is a preferred candidate, the assisting UE should consider the ratio between the RSRP level of the assisted UE and the RSRP levels of the UEs that have reserved the adjacent interlaced sub-channels. Subsequently, if the ratio is outside the configured range for the resource pool then this resource candidate should be declared as non-preferred.

**Scheme 1, subcase 2:** The trigger for sending the assistance information was a pre-configured condition(s) and the assistance information is sent to neighboring UE that recently transmitted (i.e., the RSRP level of the assisted UE is known): If the assisted target UE has recently performed a transmission (i.e., earlier than a validity timer that is configured per resource pool), then the NR UE can rely on the last received RSRP level when generating the assistance information. In particular, the assisting UE should consider the ratio between the last received RSRP level of the assisted UE and the RSRP levels of the UEs that have reserved the adjacent interlaced sub-channels. Subsequently, if the ratio is outside the configured range for the resource pool then this resource candidate should be declared as non-preferred.

**Scheme 1, subcase 3:** The trigger for sending the assistance information was a pre-configured condition(s) and the assistance information is sent to a neighboring UE that did not transmit recently (i.e., the RSRP level of the assisted UE is not known). In this case, the assisting UE is not aware of the RSRP level of the assisted UE. To address this, the Tx UE may rely on a pre-configured RSRP level (i.e., a pre-configured value per resource pool) when selecting the preferred/non-preferred resource set for the assisted UE as discussed hereinabove.

In the above discussion, the case wherein the Rx UE is assisting the Tx UE in the resource selection process in considered. If there is no resource selection assistance, then the Tx UE will not be aware of the RSRP levels at the Rx UE for its transmissions as well as the transmissions of the neighboring UEs of the Rx UE that are using adjacent interlaced subchannel. Additional techniques for resolving this action include the following approaches to reduce the in-band emissions:

- estimate the RSRP level based on the received RSRP from the target Rx UE (if there was a reception within a given time frame) and follow a conservative approach in which the Tx UE transmits only if the RSRP at the Rx side is either higher than a threshold or at least higher by a factor Z (where Z is pre-configured per resource pool) than the RSRP levels measured by the Tx UE for neighboring UEs that are occupying adjacent sub-channels (The selected threshold or the multiplication factor Z may be pre-configured per resource pool); or;
- use a pre-configured RSRP level when evaluating adjacent sub-channels during resource selection.

In various embodiments, resource selection assistance may be used to resolve the in-band emissions issue due to power imbalance between adjacent sub-channels.

In various embodiments, when selecting the preferred/non-preferred resource sets according to Scheme 1 of the Mode 1 resource selection, the assisting UE should consider the RSRP levels of the assisted UE and the neighboring UEs with reservations adjacent to the subchannels included in the preferred/non-preferred resource sets.

In various embodiments, to obtain the RSRP level of the assisted UE, the assisting UE may either use one of the following approaches:

- the RSRP level measured in the SCI carrying the resource selection assistance request;
- the RSRP level measured in an SCI that was recently transmitted by the assisted UE (within a given validity timer); or
- a pre-configured RSRP level.

In various embodiments, when sending a conflict indication using Scheme 2 of the Mode 2 resource selection, the assisting UE should consider the RSRP levels of UEs' transmissions on adjacent sub-channels. In various embodiments, a resource reselection indication by Scheme 2 is triggered if two UEs selected adjacent sub-channels and the difference between their RSRP levels is significant (i.e., outside a pre-configured range).

In various embodiments, in case of the absence of resource selection assistance, a Tx UE should consider the RSRP level at the Rx UE when selecting the sub-channels for transmission and avoid transmitting on sub-channels wherein adjacent sub-channels are occupied by UEs with high RSRP levels. In various embodiments, To estimate the RSRP level at the Rx side, the Tx UE may consider one of the following approaches:

- the RSRP level measured for the assisted UE recently (within a given validity timer); or
- a pre-configured RSRP level.

Accessibility of Unlicensed Bands Based on Priority

In various embodiments wherein carrier aggregation is supported, the accessibility of the unlicensed band for sidelink transmissions may be dependent on TB priority. In other words, only UEs with sidelink transmissions having a priority above a certain threshold will be allowed to transmit in the unlicensed band. Alternatively, only low priority UEs may be restricted to transmit in the unlicensed band to free up the licensed band for higher priority UEs. In this case, the unlicensed band may be used by high and low priority UEs, whereas the licensed band is used only by the high priority UEs. In addition, the restriction of using either the licensed or unlicensed bands may be based on the measured CBR whereby multiple priority-based thresholds are defined and the UE chooses among them based on the priority of its upcoming TB to be transmitted.

In various embodiments, when carrier aggregation is supported, priority thresholds may be configured to either allow/block the access of a certain subset of UEs to the unlicensed spectrum. In various embodiments, the priority-based thresholds that allows/restricts access to specific carriers (both licensed and unlicensed) may be dependent on priority.

Exclusion of Slot(s) before a Future Transmission to Create an LBT Gap

When operating in unlicensed band, an NR UE that has a future reservation at slot X will be required to perform LBT in slot X-1 or earlier and transmit only if its LBT is successful. In this case, it is beneficial to create an LBT gap before a NR UE transmission to allow an NR UE to have a successful LBT. This is because, if another UE is transmitting at slot X-1, then the NR UE that reserved slot X will be required to have a successful LBT in one symbol (i.e., the gap symbol) which might not be sufficient especially for higher subcarrier spacing transmissions. On the other hand, creating an LBT gap before every future reserved slot will reduce the system efficiency since at most 50% of the available resources will be accessible by NR UEs.

To address these issues, described here are techniques for limiting the exclusion of LBT gap from the resource selection procedures to non-Rx UEs. In particular, if UE "A" has a reservation to transmit to UE "B" in slot X, then UE B is able to access the slot and perform a COT sharing with UE A thus waiving the need for an LBT sensing in slot X-1. This is also extensible to the case of groupcast in which all the intended Rx UEs of UE A that has a reservation to transmit in slot X may actually transmit in slot X-1 and perform a COT sharing with the Tx UE.

The selection of slot X-1 for transmitting may also be given higher priority by the Rx UE(s) since this increases the chances of UE A to acquire the channel, has less chances of collisions with other neighboring UEs, and improves the overall system utilization. In this case, the Rx UE will need to provide a COT sharing indication to the Tx UE. This may be done by sending either an implicit or explicit indication of a COT sharing in the 1st or 2nd stage SCI or by using a MAC CE when the Rx UE is performing the reservation at an earlier slot to allow for processing. In particular, If UE A reserves slot X and UE B which is a recipient for UE B reserves slot X-1 for its transmission, it may include a COT sharing indication to allow UE A to be aware of the COT sharing opportunity and accordingly skip the LBT sensing.

In various embodiments, to allow an NR UE to successfully clear its LBT sensing and acquire a future reserved slot X, neighboring NR UEs are restricted from using future slot X-1 for transmissions to create an LBT gap. In various embodiments, to improve the system utilization and increase the chances of acquiring a channel, the LBT gap may be limited only to non-Rx UEs.

In various embodiments, an Rx UE might be allowed to transmit in the LBT gap of a neighboring Tx UE by sending a COT sharing indication to the Tx UE. In various embodiments, the COT sharing indication may be carried either implicitly or explicitly in the 1st or 2nd stage SCI or as a MAC CE.

Reducing the Transmission Rate of SSBs in Unlicensed Spectrum

When transmitting a synchronization signal block SSB in unlicensed spectrum, a synchronization reference (syncref) UE will be required to abide with multiple rules that may be over restrictive. For example, such a UE has to fulfill the OCB and PSD requirements when transmitting its SSB. In addition, there is a high chance that an NR UE might fail in having a successful LBT before transmitting the SSB and thus it might need to skip its SSB transmission. This will require the UE to perform multiple redundant transmissions of SSBs in the time domain to combat LBT failures. Subsequently, this will also require the NR UE to perform multiple redundant transmissions of SSBs in time and frequency and accordingly waste system resources and UE power.

To solve this problem, various embodiments include an update of the synchronization sources list for NR UEs. In particular, techniques are employed to reduce the chances of an NR UE being a synchronization source when operating in the unlicensed spectrum. This may be done, for example, by adding an additional possible synchronization source to the list of possible synchronization sources. In particular, if there exists a neighboring LTE syncref UE that is operating in a different band, an NR UE with an LTE modem may first attempt to synchronize to this UE before attempting to transmit the SSBs in the unlicensed band. In other words, LTE syncref UE will be given priority over NR syncref UE as shown in the synchronization source order table below:

| Order | Synchronization source |
|---|---|
| Level 1 | Either GNSS or eNB/gNB, according to (pre-)configuration. |
| Level 2 | A SyncRef UE directly synchronized to a Level 1 source. |
| Level 3 | A SyncRef UE synchronized to a Level 2 source, i.e. indirectly synchronized to a Level 1 source. |

(continued)

| Order | Synchronization source |
|---|---|
| Level 4 | Whichever of GNSS or eNB/gNB was not (pre-)configured as the Level 1 source. |
| Level 5 | A SyncRef UE directly synchronized to a Level 4 source. |
| Level 6 | A SyncRef UE synchronized to a Level 5 source, i.e. indirectly synchronized to a Level 4 source. |
| Level 7 | Any other SyncRef UE. |
| Level 8 | LTE Syncref UE |
| Level 9 (optional) | A SyncRef UE directly synchronized to a Level 4 source. |
| Level 10 (Optional) | A SyncRef UE synchronized to a Level 5 source, i.e. indirectly synchronized to a Level 4 source. |
| Level 11 | UE's internal clock. |

Note that the addition of these synchronization sources to the list may also be limited to the unlicensed spectrum operation. In various embodiments, to reduce the overhead and uncertainty associated with sending SSBs in unlicensed spectrum, an NR UE may first attempt to synchronize to any neighboring LTE syncref UE operating in licensed spectrum. In various embodiments, the order of the synchronization sources for sidelink unlicensed spectrum operation is updated as follows:

| Order | Synchronization source |
|---|---|
| Level 1 | Either GNSS or eNB/gNB, according to (pre-)configuration. |
| Level 2 | A SyncRef UE directly synchronized to a Level 1 source. |
| Level 3 | A SyncRef UE synchronized to a Level 2 source, i.e. indirectly synchronized to a Level 1 source. |
| Level 4 | Whichever of GNSS or eNB/gNB was not (pre-)configured as the Level 1 source. |
| Level 5 | A SyncRef UE directly synchronized to a Level 4 source. |
| Level 6 | A SyncRef UE synchronized to a Level 5 source, i.e. indirectly synchronized to a Level 4 source. |
| Level 7 | Any other SyncRef UE. |
| Level 8 | LTE Syncref UE |
| Level 9 (optional) | A SyncRef UE directly synchronized to a Level 4 source. |
| Level 10 (Optional) | A SyncRef UE synchronized to a Level 5 source, i.e. indirectly synchronized to a Level 4 source. |
| Level 11 | UE's internal clock. |

The updated synchronization source list may be enabled/disabled per resource pool configuration.

Redundant TB Reservations with Early Release

To increase the chances of transmitting in the unlicensed band, an NR UE may perform multiple blind reservations for its TB transmission. In this case, it may attempt to acquire the channel and perform the LBT multiple times for the same TB. However, this will require extra resources to be reserved by the UE thus reducing the resource utilization and preventing other NR UEs from accessing the medium. To address these issues various embodiments described herein may be employed:

**Option 1:** A maximum number of redundant transmissions is utilized. The maximum number of redundant reservation may be configured per resource pool and may be dependent on CBR or priority. In this case, UEs with different priorities/CBR values may have different number of redundant transmissions.

**Option 2:** Implicit early release with indication. In this case, if a UE has scheduled multiple reservations for the same TB, neighboring UEs may consider the upcoming reservations as revoked if the transmitting UE was able to acquire the channel. In this case, the transmitting UE, when performing the reservation, uses the 1st or 2nd stage SCI or MAC CE to indicate that the upcoming reservations of the TB are redundant and that it will not use them for transmission once the channel is acquired and an earlier transmission of the TB is done. Note that a subset of the upcoming reservations may also cancelled by configuration (e.g., all the upcoming reservations after the first one).

The new SCI structure with the extra fields may be limited to the sidelink unlicensed band. In various embodiments, to increase the reliability of transmissions in unlicensed, an NR UE may be required to perform multiple redundant reservations for a TB transmission. In various embodiments, the maximum number of redundant reservations for a TB transmission may be configured per resource pool and may be dependent on CBR or priority or both.

In various embodiments, a UE may use the $1^{st}$ or $2^{nd}$ stage SCI or MAC CE to indicate that the upcoming reservations for the TB are redundant. In various embodiments, In case of redundant reservations, all upcoming reservations are considered as cancelled once a UE is able to acquire the channel and transmit its TB.

Example System Architecture

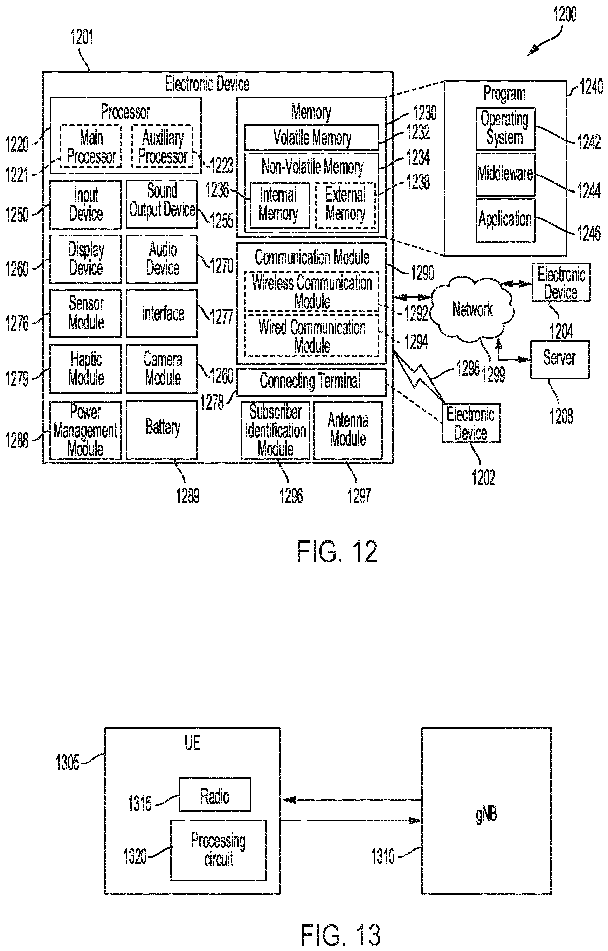

FIG. 12 is a block diagram of an electronic device in a network environment 1200, according to an embodiment. The electronic device of FIG. 12 may comprise the receiving UE or transmitting UE performing the functions and embodiments described herein, such as those illustrated in FIGS. 1-11.

Referring to FIG. 12, an electronic device 1201 in a network environment 1200 may communicate with an electronic device 1202 via a first network 1298 (e.g., a short-range wireless communication network), or an electronic device 1204 or a server 1208 via a second network 1299 (e.g., a long-range wireless communication network). The electronic device 1201 may communicate with the electronic device 1204 via the server 1208. The electronic device 1201 may include a processor 1220, a memory 1230, an input device 1250, a sound output device 1255, a display device 1260, an audio module 1270, a sensor module 1276, an interface 1277, a haptic module 1279, a camera module 1280, a power management module 1288, a battery 1289, a communication module 1290, a subscriber identification module (SIM) card 1296, or an antenna module 1297. In one embodiment, at least one (e.g., the display device 1260 or the camera module 1280) of the components may be omitted from the electronic device 1201, or one or more other components may be added to the electronic device 1201. Some of the components may be implemented as a single integrated circuit (IC). For example, the sensor module 1276 (e.g., a fingerprint sensor, an iris sensor, or an illuminance sensor) may be embedded in the display device 1260 (e.g., a display).

The processor 1220 may execute software (e.g., a program 1240) to control at least one other component (e.g., a hardware or a software component) of the electronic device 1201 coupled with the processor 1220 and may perform various data processing or computations.

As at least part of the data processing or computations, the processor 1220 may load a command or data received from another component (e.g., the sensor module 1276 or the communication module 1290) in volatile memory 1232, process the command or the data stored in the volatile memory 1232, and store resulting data in non-volatile memory 1234. The processor 1220 may include a main processor 1221 (e.g., a central processing unit (CPU) or an application processor (AP)), and an auxiliary processor 1223 (e.g., a graphics processing unit (GPU), an image signal processor (ISP), a sensor hub processor, or a communication processor (CP)) that is operable independently from, or in conjunction with, the main processor 1221. Additionally or alternatively, the auxiliary processor 1223 may be adapted to consume less power than the main processor 1221, or execute a particular function. The auxiliary processor 1223 may be implemented as being separate from, or a part of, the main processor 1221.

The auxiliary processor 1223 may control at least some of the functions or states related to at least one component (e.g., the display device 1260, the sensor module 1276, or the communication module 1290) among the components of the electronic device 1201, instead of the main processor 1221 while the main processor 1221 is in an inactive (e.g., sleep) state, or together with the main processor 1221 while the main processor 1221 is in an active state (e.g., executing an application). The auxiliary processor 1223 (e.g., an image signal processor or a communication processor) may be implemented as part of another component (e.g., the camera module 1280 or the communication module 1290) functionally related to the auxiliary processor 1223.

The memory 1230 may store various data used by at least one component (e.g., the processor 1220 or the sensor module 1276) of the electronic device 1201. The various data may include, for example, software (e.g., the program 1240) and input data or output data for a command related thereto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input device 1250 may receive a command or data to be used by another component (e.g., the processor 1220) of the electronic device 1201, from the outside (e.g., a user) of the electronic device 1201. The input device 1250 may include, for example, a microphone, a mouse, or a keyboard.

The sound output device 1255 may output sound signals to the outside of the electronic device 1201. The sound output device 1255 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 1260 may visually provide information to the outside (e.g., a user) of the electronic device 1201. The display device 1260 may include, for example, a display, a hologram device, or a projector and control circuitry to control a corresponding one of the display, hologram device, and projector. The display device 1260 may include touch circuitry adapted to detect a touch, or sensor circuitry (e.g., a pressure sensor) adapted to measure the intensity of force incurred by the touch.

The audio module 1270 may convert a sound into an electrical signal and vice versa. The audio module 1270 may obtain the sound via the input device 1250 or output the sound via the sound output device 1255 or a headphone of an external electronic device 1202 directly (e.g., wired) or wirelessly coupled with the electronic device 1201.

The sensor module 1276 may detect an operational state (e.g., power or temperature) of the electronic device 1201 or an environmental state (e.g., a state of a user) external to the electronic device 1201, and then generate an electrical signal or data value corresponding to the detected state. The sensor module 1276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device 1202 directly (e.g., wired) or wirelessly. The interface 1277 may include, for example, a high- definition multimedia interface (HDMI), a universal serial bus (USB) interface, a secure digital (SD) card interface, or an audio interface.

A connecting terminal 1278 may include a connector via which the electronic device 1201 may be physically connected with the external electronic device 1202. The connecting terminal 1278 may include, for example, an HDMI connector, a USB connector, an SD card connector, or an audio connector (e.g., a headphone connector).

The haptic module 1279 may convert an electrical signal into a mechanical stimulus (e.g., a vibration or a movement) or an electrical stimulus which may be recognized by a user via tactile sensation or kinesthetic sensation. The haptic module 1279 may include, for example, a motor, a piezoelectric element, or an electrical stimulator.

The camera module 1280 may capture a still image or moving images. The camera module 1280 may include one or more lenses, image sensors, image signal processors, or flashes. The power management module 1288 may manage power supplied to the electronic device 1201. The power management module 1288 may be implemented as at least part of, for example, a power management integrated circuit (PMIC).

The battery 1289 may supply power to at least one component of the electronic device 1201. The battery 1289 may include, for example, a primary cell which is not rechargeable, a secondary cell which is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication module 1290 may include one or more communication processors that are operable independently from the processor 1220 (e.g., the AP) and supports a direct (e.g., wired) communication or a wireless communication. The communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device via the first network 1298 (e.g., a short-range communication network, such as BluetoothTM, wireless-fidelity (Wi-Fi) direct, or a standard of the Infrared Data Association (IrDA)) or the second network 1299 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1292 may identify and authenticate the electronic device 1201 in a communication network, such as the first network 1298 or the second network 1299, using subscriber information (e.g., international mobile subscriber identity (IMSI)) stored in the subscriber identification module 1296.

The antenna module 1297 may transmit or receive a signal or power to or from the outside (e.g., the external electronic device) of the electronic device 1201. The antenna module 1297 may include one or more antennas, and, therefrom, at least one antenna appropriate for a communication scheme used in the communication network, such as the first network 1298 or the second network 1299, may be selected, for example, by the communication module 1290 (e.g., the wireless communication module 1292). The signal or the power may then be transmitted or received between the communication module 1290 and the external electronic device via the selected at least one antenna.

Commands or data may be transmitted or received between the electronic device 1201 and the external electronic device 1204 via the server 1208 coupled with the second network 1299. Each of the electronic devices 1202 and 1204 may be a device of a same type as, or a different type, from the electronic device 1201. All or some of operations to be executed at the electronic device 1201 may be executed at one or more of the external electronic devices 1202, 1204, or 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 1201. The electronic device 1201 may provide the outcome, with or without further processing of the outcome, as at least part of a reply to the request. To that end, a cloud computing, distributed computing, or client-server computing technology may be used, for example.

FIG. 13 shows a system including a UE 1305 and a gNB 1310, in communication with each other. The UE may include a radio 1315 and a processing circuit (or a means for processing) 1320, which may perform various methods disclosed herein. For example, the processing circuit 1320 may receive, via the radio 1315, transmissions from the network node (gNB) 1310, and the processing circuit 1320 may transmit, via the radio 1315, signals to the gNB 1310.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions may be encoded on an artificially-generated propagated signal, e.g., a machine-generated electrical, optical, or electromagnetic signal, which is generated to encode information for transmission to suitable receiver apparatus for execution by a data processing apparatus. A computer-storage medium may be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium may also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems may generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

**Claims**

1.  A method (500) comprising:

    determining (510), by a new radio, NR, user equipment, UE, a multi-slot reservation configuration, wherein the multi-slot reservation configuration comprises a plurality of reservation slots corresponding to a time domain and a frequency domain;

performing (520), by the NR UE, a listen-before-talk, LBT, operation; and

in response to LBT operation, indicating (530), by the NR UE, a selection of a plurality of multi-slot resources in the time domain and the frequency domain on which to transmit one or more signals, the plurality of multi-slot resources corresponding to the plurality of reservation slots of the multi-slot reservation configuration.

2. The method (500) of claim 1, wherein selecting the plurality of multi-slot resources is further based on an evaluation of a high-layer parameter, the high-layer parameter corresponding to a number of consecutive reservation slots in the plurality of reservation slots.

3. The method (500) of claim 1 or 2, wherein selecting the plurality of multi-slot resources comprises selecting a single-candidate resource slot, wherein selecting the single-candidate resource slot is based at least in part on determining that a number of consecutive slots subsequent to the single-candidate resource slot, corresponding to the plurality of reservation slots, are not reserved.

4. The method (500) of claim 3, wherein the selection of the single-candidate resource slot is performed randomly.

5. The method (500) of any one of claims 1 to 4, wherein each slot of the multi-slot reservation configuration comprises separate physical sidelink control channel, PSCCH, data.

6. The method (500) of any one of claims 1 to 4, wherein only a first slot of the multi-slot reservation configuration comprises PSCCH data, the PSCCH data being transmitted at a lowest sub-channel index of a channel on which a multi-slot reservation signal is transmitted.

7. The method (500) of claim 6, wherein:

the PSCCH data further comprises a channel occupancy time, COT, sharing indication; and

the multi-slot reservation configuration further comprises one or more slots subsequent to the plurality of reservation slots comprising transmission data from a separate NR UE.

8. The method (500) of claim 6 or 7, wherein the multi-slot reservation configuration comprises sidelink control information, SCI, the SCI comprising one or more time resource indicator values, TRIV, and/or frequency resource indicator values, FRIV.

9. The method (500) of any one of claims 1 to 8, wherein each slot of the selected plurality of multi-slot resources carries a different data transport block, TB.

10. The method (500) of any one of claims 1 to 9, wherein each slot of the selected plurality of multi-slot resources is a blind repetition of a single TB.

11. The method (500) of any one of claims 1 to 10, wherein a number of slots within the multi-slot reservation configuration is configured or pre-configured according to a resource pool configuration.

12. An NR UE device comprising:

a processor; and

a memory including instructions which, when executed by the processor, cause the NR UE device to:

determine (510) a multi-slot reservation configuration, wherein the multi-slot reservation configuration comprises a plurality of reservation slots corresponding to a time domain and a frequency domain;

perform (520) a listen-before-talk, LBT, operation; and

in response to LBT operation, indicate (530) a selection of a plurality of multi-slot resources in the time domain and the frequency domain on which to transmit one or more signals, the plurality of multi-slot resources corresponding to the plurality of reservation slots of the multi-slot reservation configuration.

13. The NR UE device of claim 12, wherein selecting the plurality of multi-slot resources is further based on an evaluation of a high-layer parameter, the high-layer parameter corresponding to a number of consecutive reservation slots in the plurality of reservation slots.

14. The NR UE device of claim 12 or 13, wherein selecting the plurality of multi-slot resources comprises selecting a single-candidate resource slot, wherein selecting the single-candidate resource slot is based at least in part on determining that a number of consecutive slots subsequent to the single-candidate resource slot, corresponding to the plurality of reservation slots, are not reserved.

15. The NR UE device of claim 14, wherein the selection of the single-candidate resource slot is performed randomly.

FIG. 1

*** PRIOR ART ***

FIG. 2

EP 4 301 038 A1

FIG. 3

EP 4 301 038 A1

FIG. 4

500

Determine a multi-slot reservation configuration comprising a plurality of reservation slots corresponding to a time domain and frequency domain ⌐510

Perform a listen-before-talk (LBT) operation ⌐520

Indicate a selection of a plurality of multi-slot resources in the time domain and the frequency domain on which to transmit one or more signals, the plurality of multi-slot resources corresponding to the plurality of reservation slots of the multi-slot reservation configuration ⌐530

FIG. 5

FIG. 6A

FIG. 6B

FIG. 6C

700

NR UE has data to transmit and performs LBT to transmit at a future reserved slot — 710

LBT successful at mini-slot boundary? — 720

NO

YES

Mini-slot configured in resource pool? — 730

NO

YES

Continue LBT Sensing — 750

LBT successful at slot boundary? — 760

YES

NO

Select one or more subchannels for transmission in mini-slot configuration based on Tx UE priority — 740

Transmit at reserved slot and sub-channel(s) — 770

Drop the TB transmission — 780

FIG. 7

800

| LBT | TB |
|---|---|

TB transmission with COT sharing indication

| LBT | TB | ACK/NACK |
|---|---|---|

TB blind retransmission

Time

FIG. 8A

810

| LBT | TB | TB | TB | ACK/NACK |
|---|---|---|---|---|

TB transmission with
COT sharing indication

TB blind
retransmissions

Time

FIG. 8B

900

910    920

| AGC | PSCCH | PSCCH | PSSCH | PSSCH | PSSCH | PSSCH | PSSCH | PSSCH | Gap | Gap | AGC | PSFCH | Gap |

NR Slot

FIG. 9

1000

FIG. 10

1100

Frequency

| Subchannel 3 |
| Gap |
| Subchannel 2 |
| Gap |
| Subchannel 1 |
| Gap |
| Subchannel 0 |
| Gap |
| Subchannel 3 |
| Gap |
| Subchannel 2 |
| Gap |
| Subchannel 1 |
| Gap |
| Subchannel 0 |
| Gap |
| Subchannel 3 |
| Gap |
| Subchannel 2 |
| Gap |
| Subchannel 1 |
| Gap |
| Subchannel 0 |
| Gap |

1 RB

4 RBs

Interlaced sub-channel 0

FIG. 11

FIG. 12

FIG. 13

Europäisches
Patentamt

European
Patent Office

Office européen
des brevets

**EUROPEAN SEARCH REPORT**

Application Number

EP 23 18 0276

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QUALCOMM INCORPORATED: "Channel access mechanism for Sidelink on Unlicensed Spectrum", 3GPP DRAFT; R1-2205033, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20220509 – 20220520 29 April 2022 (2022-04-29), XP052144139, Retrieved from the Internet: URL:https://ftp.3gpp.org/tsg_ran/WG1_RL1/T SGR1_109-e/Docs/R1-2205033.zip R1-2205033.docx [retrieved on 2022-04-29] | 1,3-5, 11,12, 14,15 | INV. H04W28/26 ADD. H04W72/04 H04W72/40 H04W74/08 H04W72/25 |
| Y | * paragraph [2.3.1] – paragraph [2.4.1]; figure 10 * ----- | 2,6-10, 13 | |
| Y | HUAWEI ET AL: "Transmission with configured grant in NR unlicensed band", 3GPP DRAFT; R1-1908112, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20190826 – 20190830 17 August 2019 (2019-08-17), XP051764732, Retrieved from the Internet: URL:http://www.3gpp.org/ftp/tsg_ran/WG1_RL 1/TSGR1_98/Docs/R1-1908112.zip [retrieved on 2019-08-17] * paragraph [2.1.1] * ----- -/-- | 2,13 | **TECHNICAL FIELDS SEARCHED (IPC)** H04W |

The present search report has been drawn up for all claims

| Place of search | Date of completion of the search | Examiner |
|---|---|---|
| The Hague | 15 November 2023 | Tsapelis, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

**EUROPEAN SEARCH REPORT**

Application Number

EP 23 18 0276

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | FRAUNHOFER HHI ET AL: "Resource Allocation for Mode 2 NR V2X", 3GPP DRAFT; R1-1912289, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20191118 - 20191122 8 November 2019 (2019-11-08), XP051819983, Retrieved from the Internet: URL:https://ftp.3gpp.org/tsg_ran/WG1_RL1/TSGR1_99/Docs/R1-1912289.zip R1-1912289_Mode2RA.docx [retrieved on 2019-11-08] * paragraph [0005] * ----- | 6-8 | |
| Y | QUALCOMM INCORPORATED: "Physical Channel Design for Sidelink on Unlicensed Spectrum", 3GPP DRAFT; R1-2205034, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20220509 - 20220520 29 April 2022 (2022-04-29), XP052144140, Retrieved from the Internet: URL:https://ftp.3gpp.org/tsg_ran/WG1_RL1/TSGR1_109-e/Docs/R1-2205034.zip R1-2205034.docx [retrieved on 2022-04-29] * paragraph [2.1.1.4]; figure 5 * ----- -/-- | 6-8 | TECHNICAL FIELDS SEARCHED (IPC) |

The present search report has been drawn up for all claims

| Place of search | Date of completion of the search | Examiner |
|---|---|---|
| The Hague | 15 November 2023 | Tsapelis, Athanasios |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
   .......................................................
& : member of the same patent family, corresponding
   document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ERICSSON: "PHY channel design framework for SL-U", 3GPP DRAFT; R1-2204742, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20220509 - 20220520 29 April 2022 (2022-04-29), XP052203827, Retrieved from the Internet: URL:https://ftp.3gpp.org/tsg_ran/WG1_RL1/T SGR1_109-e/Docs/R1-2204742.zip R1-2204742 Ericsson - PHY channel design framework for SL-U.docx [retrieved on 2022-04-29] * paragraph [03.2] * ----- | 9,10 | |
| A | INTERDIGITAL ET AL: "SL U physical layer design framework", 3GPP DRAFT; R1-2203646, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20220509 - 20220520 29 April 2022 (2022-04-29), XP052153091, Retrieved from the Internet: URL:https://ftp.3gpp.org/tsg_ran/WG1_RL1/T SGR1_109-e/Docs/R1-2203646.zip R1-2203646_SL U physical layer design framework.docx [retrieved on 2022-04-29] * paragraph [02.1] * ----- | 6 | TECHNICAL FIELDS SEARCHED (IPC) |

The present search report has been drawn up for all claims

| Place of search | Date of completion of the search | Examiner |
|---|---|---|
| The Hague | 15 November 2023 | Tsapelis, Athanasios |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ...................................................................................
& : member of the same patent family, corresponding
   document

EPO FORM 1503 03.82 (P04C01)